(19) Europäisches Patentamt European Patent Office Office européen des brevets

(11) **EP 4 506 769 A1**

(12) **EUROPEAN PATENT APPLICATION**

(43) Date of publication:
**12.02.2025 Bulletin 2025/07**

(21) Application number: **24159046.2**

(22) Date of filing: **22.02.2024**

(51) International Patent Classification (IPC):
**G05B 23/02** (2006.01)  **G06N 7/01** (2023.01)
**G06Q 10/063** (2023.01)  **G06Q 10/0639** (2023.01)
**G06Q 10/10** (2023.01)  **G06Q 50/04** (2012.01)

(52) Cooperative Patent Classification (CPC):
**G05B 23/024; G06N 7/01; G06Q 10/0639;
G06Q 10/087; G06Q 50/04**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.08.2023 JP 2023131412**

(71) Applicants:
• **Kabushiki Kaisha Toshiba
Minato-ku
Tokyo 105-0023 (JP)**
• **Toshiba Infrastructure Systems &
Solutions Corporation
Kawasaki-shi, Kanagawa 212-0013 (JP)**
(72) Inventors:
• **Kawauchi, Keisuke
Tokyo 105-0023 (JP)**
• **Matsuo, Takuya
Tokyo 105-0023 (JP)**
• **Watanabe, Wataru
Tokyo 105-0023 (JP)**
• **Ono, Toshiyuki
Tokyo 105-0023 (JP)**

(74) Representative: **Hoffmann Eitle
Patent- und Rechtsanwälte PartmbB
Arabellastraße 30
81925 München (DE)**

(54) **CAUSE ANALYZING APPARATUS, CAUSE ANALYSIS METHOD, AND PROGRAM**

(57) According to one example, a cause analyzing apparatus (1) acquires a reference data group and target data. The cause analyzing apparatus calculates an outlier score of an explanatory variable of the target data. The cause analyzing apparatus calculates a relationship weight representing strength of a relationship between an objective variable and the explanatory variable of the reference data group. The cause analyzing apparatus calculates a property weight representing a degree of match between values of the objective variable and the explanatory variable of the target data. The cause analyzing apparatus calculates a cause score of the explanatory variable based on the outlier score, the relationship weight, and the property weight.

F I G. 1

Processed by Luminess, 75001 PARIS (FR)

## Description

FIELD

Embodiments described herein relate generally to a cause analyzing apparatus, a cause analysis method, and a program.

BACKGROUND

In a distribution warehouse, when work efficiency, working time, or the like changes to a specific state, it is important to identify a cause of the change at an early stage. For example, when an abnormality occurs in which the work efficiency changes from a normal state to a decreased state, it is possible to maintain or improve the work efficiency by identifying the cause of the decrease at an early stage. The cause can be identified by acquiring various data in warehouse work and examining information of the entire warehouse and information relating to individual work. For example, in a case where the work efficiency decreases during a certain period, data indicating the total amount of products handled during the certain period is acquired, and information indicating the individual working time of each worker is examined. As a result, there is a possibility that the cause of the change can be identified as an increase in the total amount of products to be handled and extension of the working time due to the increase in the total amount.

With regard to the identification of such a cause, development of an apparatus or a system that acquires and examines data is in progress in a manufacturing factory where mechanization has progressed and data acquisition has become easy. For example, an analyzing apparatus that performs analysis for identifying a cause of a change to an abnormality in a manufacturing factory is known. This analyzing apparatus acquires first data relating to a state corresponding to an objective variable and second data relating to a manufacturing condition corresponding to an explanatory variable for a product group or the like manufactured in a manufacturing factory in one day. Thereafter, the analyzing apparatus obtains index values for the first data and the second data, and changes display modes of information relating to the first data and the second data based on the index values. Note that, in a manufacturing factory, it is assumed that a plurality of abnormalities occur under the same condition as a result of repeating certain operations. Therefore, the analyzing apparatus focuses on bias in the number of products determined to be abnormal with respect to the index value of the second data, and calculates a p-value in a framework of a statistical test to identify a cause of a change in the first data.

However, unlike a manufacturing factory that repeats a certain operation, in a distribution warehouse, there is variation in a steady state, and thus it is assumed that an abnormality occurs independently for each condition. For example, in a distribution warehouse, there are many factors that cannot be controlled by a warehouse operator, such as the number of orders from customers, order reception time, and the like, in addition to the fact that the types of products, work contents of workers, and the like are not constant. Therefore, in the distribution warehouse, it is rare that a plurality of abnormalities occur under the same condition, and abnormalities occur independently. Therefore, in the distribution warehouse, when a change to an abnormal state occurs independently, it is difficult to identify the cause of the change even in a case where an analyzing apparatus that calculates a p-value from bias in abnormalities when the plurality of abnormalities occurs is used.

BRIEF DESCRIPTION OF DRAWINGS

FIG. 1 is a block diagram illustrating an example of a cause analyzing apparatus according to a first embodiment.
FIG. 2 is a flowchart for explaining an operation in the first embodiment.
FIG. 3 is a block diagram illustrating an example of a cause analyzing apparatus according to a second embodiment.
FIG. 4 is a flowchart for explaining an operation in the second embodiment.
FIG. 5 is a diagram illustrating an example of tabular data according to the second embodiment.
FIG. 6 is a diagram illustrating an example of graph data according to the second embodiment.
FIG. 7 is a diagram illustrating an example of tabular data according to the second embodiment.
FIG. 8 is a diagram illustrating an example of visualized data according to the second embodiment.
FIG. 9 is a block diagram illustrating an example of a cause analyzing apparatus according to a third embodiment.
FIG. 10 is a flowchart for explaining an operation in the third embodiment.
FIG. 11 is a diagram illustrating an example of visualized data according to the third embodiment.
FIG. 12 is a schematic diagram for explaining an operation in the third embodiment.
FIG. 13 is a diagram illustrating another example of the visualized data according to the third embodiment.
FIG. 14 is a diagram illustrating still another example of the visualized data according to the third embodiment.

FIG. 15 is a schematic diagram for explaining an operation in a modification of the third embodiment.

FIG. 16 is a diagram illustrating an example of visualized data according to another modification of the third embodiment.

FIG. 17 is a diagram illustrating an example of a hardware configuration of a cause analyzing apparatus according to a fourth embodiment.

DETAILED DESCRIPTION

In general, according to one example, a cause analyzing apparatus (1) includes an acquiring unit (10), an outlier score calculating unit (21), a relationship weight calculating unit (22), a property weight calculating unit (23), and a cause score calculating unit (24). The acquiring unit (10) is configured to acquire a reference data group including an objective variable and an explanatory variable, and target data including an objective variable and an explanatory variable. The outlier score calculating unit (21) is configured to calculate an outlier score indicating a degree of deviation of the explanatory variable of the target data from a first distribution relating to the explanatory variable of the reference data group. The relationship weight calculating unit (22) is configured to calculate a relationship weight representing strength of a relationship between the objective variable and the explanatory variable of the reference data group. The property weight calculating unit (23) is configured to calculate a property weight representing a degree of match between values of the objective variable and the explanatory variable of the target data, and a second distribution relating to the objective variable and the explanatory variable of the reference data group. The cause score calculating unit (24) is configured to calculate a cause score of the explanatory variable for a change in the objective variable of the target data based on the outlier score, the relationship weight, and the property weight.

Hereinafter, embodiments will be described with reference to the drawings. In the following description, a cause analyzing apparatus that analyzes a cause of a change in an objective variable using an explanatory variable will be described with examples. Note that the cause analyzing apparatus may be referred to as a data analyzing apparatus or a cause score calculating apparatus.

(First Embodiment)

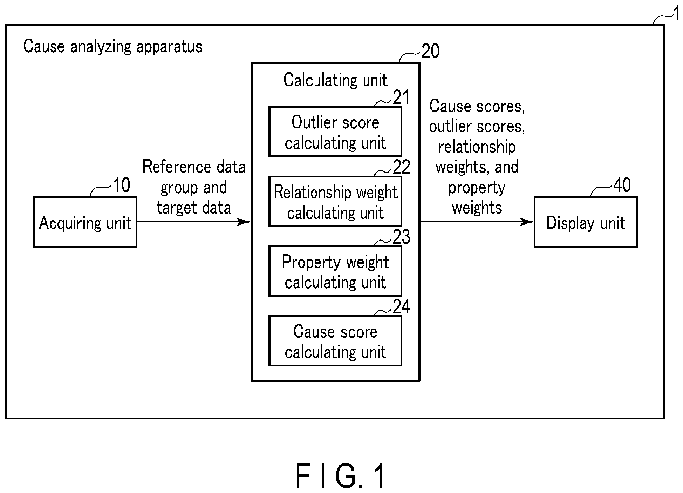

FIG. 1 is a block diagram illustrating an example of a cause analyzing apparatus and a peripheral configuration of the cause analyzing apparatus according to a first embodiment. The cause analyzing apparatus 1 includes an acquiring unit 10 and a calculating unit 20. The calculating unit 20 includes an outlier score calculating unit 21, a relationship weight calculating unit 22, a property weight calculating unit 23, and a cause score calculating unit 24. In addition, the calculating unit 20 is connected to a display unit 40. Note that the display unit 40 is not essential and may be omitted.

The acquiring unit 10 acquires a reference data group including an objective variable and an explanatory variable and target data including an objective variable and an explanatory variable, and inputs the reference data group and the target data to the calculating unit 20. For example, the acquiring unit 10 may acquire the reference data group and the target data from a database device (not illustrated) storing warehouse information in a distribution warehouse via a network. The acquiring unit 10 may be read as an arbitrary name such as an input unit.

The reference data group is a data group used as a reference in a case where cause analysis is performed, and includes two or more pieces of reference data including one or more objective variables $Y_i$ and two or more explanatory variables $X_j$. To supplement the explanation, the reference data is a set ($Y_i$, $X_1$,..., $X_j$) of the one or more objective variables $Y_i$ and the two or more explanatory variables $X_j$.

The target data is data to be subjected to the cause analysis, and includes one or more objective variables $Y_i$ and two or more explanatory variables $X_j$. The target data may be read as an arbitrary name such as calculation target data or cause score calculation target data.

The objective variable $\{Y_i: i = 1... N$, N is an integer of 1 or more$\}$ represents data relating to a state changed due to occurrence of an abnormality in the warehouse information in the distribution warehouse. In this case, N represents the number of items of the acquired objective variable.

As the objective variable $Y_i$, for example, it is possible to appropriately use the work efficiency of the warehouse and the total amount of products handled that are acquired in units in which the cause analysis is desired to be performed. The objective variable $Y_i$ is typically a statistical amount calculated for a certain unit, but is not limited thereto, and may be an actual amount such as work efficiency of one task of each worker or a product handled. Furthermore, the objective variable $Y_i$ is not limited to the amount, and may be a result of some determination. For example, the objective variable $Y_i$ may be an integer value of five-stage evaluation in which magnitude with respect to a plurality of different thresholds is determined for the working time for one task, or may be a binary flag or the like in which quality with respect to one threshold is determined. In addition, the objective variable $Y_i$ can be appropriately used as long as it is warehouse information in which a user has determined that an abnormality has occurred and on which the user wants to perform the cause analysis.

The explanatory variables $\{x_j: j = 1... M$, M is an integer of 2 or more$\}$ represent data that can cause a change in the objective variable Yi in the warehouse information. In this case, M represents the number of items of the acquired explanatory variables.

As each of the explanatory variables Xj, for example, it is possible to appropriately use the working time of the worker, the number of types of products handled, and the number of processes. Similarly to the objective variable Yi, the explanatory variables Xj are typically statistical amounts, but are not limited thereto, and may be actual amounts. In addition, each of the explanatory variables Xj is not limited to the amount, and may be a result of some determination or category information. For example, in a case where category information such as a product name, delivery destination information, and a worker name is input as each of the explanatory variables Xj, the category information may be quantified using a numerical conversion method and then input. As the numerical conversion method, for example, one-hot encoding, label encoding, count encoding, and target encoding can be used as appropriate. In addition, the explanatory variables Xj can be appropriately used as long as the explanatory variables Xj are warehouse information determined by the user to be a cause of the change in the objective variable Yi.

Meanwhile, the calculating unit 20 calculates cause scores of the explanatory variables Xj for the change in the objective variable Yi of the target data based on the reference data group and the target data input from the acquiring unit 10. Specifically, the calculating unit 20 calculates the cause scores from the reference data group and the target data by the outlier score calculating unit 21, the relationship weight calculating unit 22, the property weight calculating unit 23, and the cause score calculating unit 24.

The outlier score calculating unit 21 calculates an outlier score based on the reference data group and the target data. For example, the outlier score calculating unit 21 calculates an outlier score indicating a degree of deviation of each of the explanatory variables Xj of the target data from a first distribution relating to each of the explanatory variables Xj of the reference data group. As the first distribution, for example, a frequency distribution can be used as appropriate. The frequency distribution may be referred to as a frequency distribution or a histogram. As the outlier score, for example, a Z score, a score based on the Hotelling's T2 method, or a score based on kernel density estimation can be appropriately used.

The relationship weight calculating unit 22 calculates a relationship weight based on the reference data group. For example, the relationship weight calculating unit 22 calculates a relationship weight representing the strength of the relationship between the objective variable Yi and the explanatory variables Xj of the reference data group. As the relationship weight, for example, an absolute value of a correlation coefficient, a correlation coefficient, a maximum information coefficient, or a cosine similarity can be appropriately used.

The property weight calculating unit 23 calculates a property weight based on the reference data group and the target data. For example, the property weight calculating unit 23 calculates a property weight representing a degree of match between values of the objective variable Yi and the explanatory variables Xj of the target data, and a second distribution relating to the objective variable Yi and the explanatory variables Xj of the reference data group. Furthermore, for example, the property weight calculating unit 23 may calculate the degree of match as the property weight based on the residual between the theoretical value of the objective variable Yi of the reference data group calculated by an estimation model for the second distribution and the actual measured value of the objective variable Yi of the target data. As the second distribution, for example, a scatter diagram can be used as appropriate. As the estimation model, for example, a regression method such as a linear regression model or a nonlinear regression model may be used. The property weight may be referred to as a residual weight.

The cause score calculating unit 24 calculates cause scores of the explanatory variables Xj for the change in the objective variable Yi of the target data based on the outlier score, the relationship weight, and the property weight. For example, the cause score calculating unit 24 calculates the cause score for each combination of one objective variable Yi and one explanatory variable Xj in the target data. Furthermore, for example, the cause score calculating unit 24 calculates the cause score by multiplying the outlier score, the relationship weight, and the property weight by each other.

The display unit 40 is a display that displays data output from the cause analyzing apparatus 1. For example, the display unit 40 displays the outlier score, the relationship weight, the property weight, the cause score, and the like output from the calculating unit 20. Furthermore, for example, the display unit 40 may display the reference data group and the target data acquired by the acquiring unit 10.

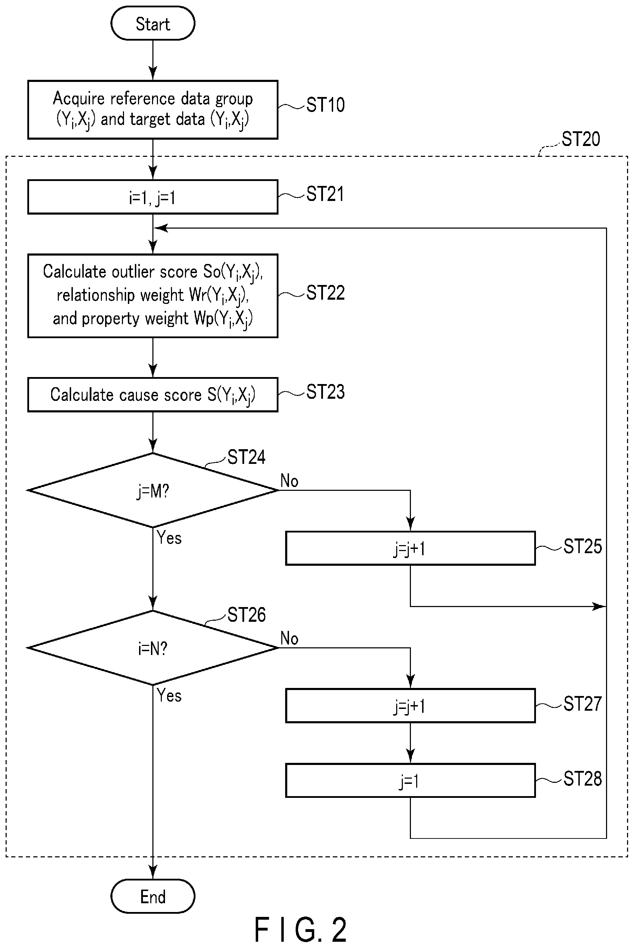

Next, an operation of the cause analyzing apparatus configured as described above will be described with reference to a flowchart of FIG. 2.

(Step ST10)

The acquiring unit 10 of the cause analyzing apparatus 1 acquires the reference data group (Yi, Xj) including the objective variable Yi and the explanatory variables Xj and the target data (Yi, Xj) including the objective variable Yi and the explanatory variables Xj, and inputs the reference data group and the target data to the calculating unit 20.

(Step ST20)

After step ST10, the calculating unit 20 executes step ST20 of calculating the cause score of each explanatory variable Xj for the change in the objective variable Yi by using the objective variable {Yi: i = 1... N, N is an integer of 1 or more} and the explanatory variables {Xj: j = 1... M, M is an integer of 1 or more}. Step ST20 includes steps ST21 to ST28.

In step ST21, the calculating unit 20 sets an item i of the one or more objective variables Yi to 1 (i = 1), and sets an item j of the two or more explanatory variables Xj to 1 (j = 1).

After step ST21, in step ST22, the calculating unit 20 calculates an outlier score So(Yi, Xj), a relationship weight Wr(Yi, Xj), and a property weight Wp(Yi, Xj) based on the reference data group (Yi, Xj) and the target data (Yi, Xj). The outlier score, the relationship weight, and the property weight are calculated by the outlier score calculating unit 21, the relationship weight calculating unit 22, and the property weight calculating unit 23 in any order.

For example, the outlier score calculating unit 21 calculates the outlier score So(Yi, Xj) indicating the degree of deviation of the explanatory variable Xj of the target data from the first distribution relating to the explanatory variable Xj of the reference data group. The outlier score So(Yi, Xj) is a value representing the relative positioning of the explanatory variable Xj of the target data with respect to a distribution of the explanatory variables Xj of the reference data group. As the outlier score So(Yi, Xj), a Z score known as a score indicating the relative position of an individual in a population will be described as an example, but the outlier score So(Yi, Xj) is not limited thereto. For example, the outlier score So(Yi, Xj) may be a score based on the Hotelling's T2 method or a score based on kernel density estimation. Furthermore, the outlier score So(Yi, Xj) may be calculated using a machine learning method such as a support vector machine, deep learning, or the like. The outlier score So(Yi, Xj) using the Z score is calculated by Equation (1).

$$S_o\left(Y_i, X_j\right) = \frac{x - \bar{\mu}}{\sigma}$$

$$\cdots \quad (1)$$

In Equation (1), x is a value of the explanatory variable Xj of the target data. $\bar{\mu}$ (the bar is directly above $\mu$) is the average value of the explanatory variables Xj of the reference data group. $\sigma$ is a standard deviation of the explanatory variable Xj of the reference data group. The Z score indicates that the farther the Z score is from 0, the more the explanatory variable Xj deviates from the distribution of the population. That is, the Z score indicates the degree of deviation of the explanatory variable Xj of the target data as compared with the explanatory variable Xj of the reference data group as the population.

Next, the relationship weight calculating unit 22 calculates the relationship weight Wr(Yi, Xj) indicating the strength of the relationship between the objective variable Yi and the explanatory variable Xj of the reference data group. As the relationship weight Wr(Yi, Xj), an absolute value of a correlation coefficient known as a coefficient representing a relationship between two variables will be described as an example, but the relationship weight Wr(Yi, Xj) is not limited thereto. In addition, the relationship weight Wr(Yi, Xj) does not need to be an absolute value in a case where the positive or negative of the relationship between the objective variable Yi and the explanatory variable Xj is meaningful. In addition, the relationship weight Wr(Yi, Xj) may be any value that can represent a relationship between two variables, such as a maximum information coefficient, a cosine similarity, and a derivative form of the maximum information coefficient or the cosine similarity. The relationship weight Wr(Yi, Xj) using the absolute value of the correlation coefficient is calculated by Equation (2).

$$W_r\left(Y_i, X_j\right) = \left|\frac{Cov_{(Y_i, X_j)}}{\sigma_{Y_i} \times \sigma_{X_j}}\right|$$

$$\cdots \quad (2)$$

In Equation (2), Cov(Yi, Xj) is a covariance of the objective variable Yi and the explanatory variable Xj of the reference data group. $\sigma_{Yi}$ is a standard deviation of the objective variable Yi of the reference data group. $\sigma_{Xj}$ is a standard deviation of the explanatory variable Xj of the reference data group. The absolute value of the correlation coefficient takes a value from 0 to 1. The closer to 1 the absolute value is, the stronger the relationship between the objective variable Yi and the explanatory variable Xj is.

Next, the property weight calculating unit 23 calculates the property weight Wp(Yi, Xj) representing the degree of match between the values of the objective variable Yi and the explanatory variable Xj of the target data, and the second distribution including the objective variable Yi and the explanatory variables Xj of the reference data group. Furthermore, for example, the property weight calculating unit 23 may calculate the degree of match as the property weight based on the residual between the theoretical value of the objective variable Yi of the reference data group calculated by the estimation model for the second distribution and the actual measured value of the objective variable Yi of the target data. In this example, a linear regression model is used as the estimation model. However, the estimation model is not limited to the linear regression model, and may be a nonlinear regression model as long as the estimation model is a model capable of evaluating a distribution of another reference data group. The property weight Wp(Yi, Xj) using the residual between the theoretical value and the measured value is calculated according to Equation (3).

$$W_p\left(Y_i, X_j\right) = exp\left\{-\frac{(res - \bar{\mu}_{res})^2}{2\sigma_{res}^2}\right\}$$

$$\cdots \quad (3)$$

In Equation (3), res is the residual between the theoretical value calculated from the estimation model and the actual measured value of the target data. $\mu^-_{res}$ (the bar is directly above $\mu_{res}$) is an average value of residuals between the theoretical value calculated from the estimation model and each actual measured value of the reference data group. $\sigma_{res}$ is a standard deviation of the residuals between the theoretical value calculated from the estimation model and each actual measured value of the reference data group. A weight of the residuals takes a value from 0 to 1. The closer to 1 the weight is, the closer to the property of the reference data group the property of the target data is.

After calculating each of the outlier score So(Yi, Xj), the relationship weight Wr(Yi, Xj), and the property weight Wp(Yi, Xj), the calculating unit 20 ends step ST22.

In step ST23, the cause score calculating unit 24 calculates a cause score of the explanatory variable Xj for the change in the objective variable Yi of the target data based on the outlier score So(Yi, Xj), the relationship weight Wr(Yi, Xj), and the property weight Wp(Yi, Xj). For example, the cause score calculating unit 24 calculates the cause score for each combination of one objective variable Yi and one explanatory variable Xj in the target data. The cause score S(Yi, Xj) is a value for evaluating a degree of relative deviation of the target data from the reference data group. The cause score S(Yi, Xj) is calculated by multiplying the outlier score So(Yi, Xj), the relationship weight Wr(Yi, Xj), and the property weight Wp(Yi, Xj) by each other, for example, as indicated by Equation (4).

$$S\left(Y_i, X_j\right) = S_o\left(Y_i, X_j\right) \times W_r\left(Y_i, X_j\right) \times W_p\left(Y_i, X_j\right)$$

$$\cdots \quad (4)$$

The cause score S(Yi, Xj) indicates that the farther the cause score S(Yi, Xj) is from 0, the more the explanatory variable Xj deviates from the distribution of the population. That is, as the cause score S(Yi, Xj) is farther from 0, the explanatory variable Xj of the target data deviates from the explanatory variables Xj of the reference data group of the population, indicating that the explanatory variable Xj of the target data is more likely to relate to the cause of the change in the objective variable Yi. After the cause score S(Yi, Xj) is calculated, step ST23 ends.

In step ST24, the calculating unit 20 determines whether or not the item j of the explanatory variable Xj has reached the maximum value "M". In a case where the item j of the explanatory variable Xj has not reached the maximum value "M", the process proceeds to step ST25.

In step ST25, the calculating unit 20 increases the item j of the explanatory variable Xj by 1 and returns the process to step ST22. As a result, steps ST22 to ST24 are repeatedly performed on the explanatory variable Xj with the item j increased by 1, and the outlier score So(Yi, Xj), the relationship weight Wr(Yi, Xj), the property weight Wp(Yi, Xj), and the cause score S (Yi, Xj) are calculated.

On the other hand, in a case where the item j of the explanatory variable Xj has reached the maximum value "M" as a result of the determination in step ST24, the calculating unit 20 advances the process to step ST26.

In step ST26, the calculating unit 20 determines whether or not the item i of the objective variable Yi has reached the maximum value "N". In a case where the item i of the objective variable Yi has not reached the maximum value "N", the calculating unit 20 advances the process to step ST27.

In step ST27, the calculating unit 20 increases the item i of the objective variable Yi by 1 and advances the process to step ST28.

In step ST28, the calculating unit 20 sets the item j of the explanatory variable Xj to the initial value "1", and returns the process to step ST22. As a result, steps ST22 to ST25 are repeatedly executed on the objective variable Yi with the item i increased by 1 and the explanatory variable Xj with the item j set to the initial value "1".

On the other hand, as a result of the determination in step ST26, in a case where the item i of the objective variable Yi has reached the maximum value "N", the calculating unit 20 ends step ST20 including steps ST21 to ST28.

Through the above step ST20, the cause score of each explanatory variable Xj for the change in each objective variable Yi is calculated for each of combinations of the objective variable {Yi: i = 1... N} and the explanatory variables {xj: j = 1... M}. That is, N × M cause scores are calculated. The calculation of the cause scores means that for the cause of the change in the objective variable {Yi: i = 1... N}, the likelihood of the cause of the change is estimated from the tendency of the data of the explanatory variables {Xj: j = 1... M}. In this case, the maximum value "M" of the item j of the explanatory variables Xj is at least 2 or more. As a result, two or more cause scores S(Yi, Xj) for respective explanatory variables Xj are calculated for one objective variable Yi. In addition, by comparing the calculated cause scores S (Yi, Xj), the explanatory variable Xj of the target data used to calculate the maximum cause score S(Yi, Xj) can be specified as the cause.

After step ST20, the calculating unit 20 outputs the cause scores S(Yi, Xj), the outlier scores So(Yi, Xj), the relationship weights Wr(Yi, Xj), and the property weights Wp(Yi, Xj) to the display unit 40 as appropriate. The display unit 40 displays the output cause scores S(Yi, Xj), the output outlier scores So(Yi, Xj), the output relationship weights Wr(Yi, Xj), and the output property weights Wp(Yi, Xj).

As described above, according to the first embodiment, the acquiring unit 10 acquires the reference data group including the objective variable and the explanatory variables, and the target data including the objective variable and the explanatory variables. The outlier score calculating unit 21 calculates the outlier scores indicating the degrees of deviation of the explanatory variables Xj of the target data from the first distribution relating to the explanatory variables Xj of the reference data group. The relationship weight calculating unit 22 calculates the relationship weights representing the strength of the relationship between the objective variable Yi and the explanatory variables Xj of the reference data group. The property weight calculating unit 23 calculates the property weights representing a degree of match between the values of the objective variable Yi and the explanatory variables Xj of the target data, and the second distribution relating to the objective variable Yi and the explanatory variables Xj of the reference data group. The cause score calculating unit 24 calculates cause scores of the explanatory variables Xj for the change in the objective variable Yi of the target data based on the outlier score, the relationship weight, and the property weight.

Therefore, when a change to an abnormal state occurs independently, it is possible to identify the cause of the change. To supplement the explanation, the cause scores S(Yi, Xj) of the explanatory variables Xj for the change in the objective variable Yi of the target data are calculated, and a degree of deviation of the target data from the reference data group is quantified, so that the cause likelihood of the change in the objective variable Yi can be evaluated numerically for each explanatory variable Xj. As a result, it can be expected to identify the cause of the change in the objective variable Yi to the abnormal state at an early stage.

As a comparative example, in order to cope with an abnormality that occurs independently like a distribution warehouse, a method for evaluation with a Z score is considered instead of a statistical test of calculating a p-value from an abnormality bias when a plurality of abnormalities occurs. The evaluation method using the Z score can evaluate how much target data deviates from a frequency distribution from an average value and a standard deviation of explanatory variables Xj of a reference data group. That is, the evaluation method using the Z score can evaluate how abnormal a single explanatory variable Xj is compared with other explanatory variables Xj. However, a relationship between an objective variable Yi and the explanatory variables Xj is not considered for the Z score, and it is difficult to identify the cause of a change in the objective variable Yi. For example, in two cases which are a first case in which there is a correlation between the objective variable Yi and the explanatory variables Xj and a second case in which there is no correlation between the objective variable Yi and the explanatory variables Xj, in a case where the average value $\mu$- and the standard deviation $\sigma$ of the explanatory variables Xj are the same, the Z score is calculated with the same value from Equation (1). Therefore, as in the comparative example, the degree of abnormality of a single explanatory variable Xj in the target data can be evaluated only with the Z score, but in the second case where there is no correlation between the objective variable Yi and the explanatory variables Xj, it is difficult to identify the cause of the change in the objective variable Yi.

On the other hand, according to the first embodiment, unlike the technique of calculating the p-value in the framework of the conventional statistical test, a cause score can be identified by evaluating an abnormality degree by using the reference data group as a reference even in a case where the target data is independent and an abnormality bias does not occur. In addition, according to the first embodiment, unlike the comparative example in which only the Z score is used, the strength of the relationship between the objective variable Yi and the explanatory variables Xj of the reference data group and the degree of match of the target data from the relationship can be considered by further using the relationship weights and the property weights. For example, the strength of the correlation between the objective variable Yi and the explanatory variables Xj of the reference data group can be evaluated based on the relationship weights, and the degree of match between the reference data group and the target data can be evaluated based on the property weights. Therefore, according to the evaluation based on the cause scores using all of the outlier scores (Z scores), the relationship weights (absolute values of the correlation coefficients), and the property weights (degrees of match), it is possible to identify the cause even for an abnormality that occurs independently for each condition and has no bias, such as an abnormality that occurs in the distribution warehouse.

According to the first embodiment, the reference data group includes two or more pieces of reference data including one or more objective variables and two or more explanatory variables. The target data includes one or more objective variables Yi and two or more explanatory variables Xj. The cause score calculating unit 24 calculates a cause score S(Yi, Xj) for each combination of one objective variable Yi and one explanatory variable Xj in the target data. As a result, in addition to the effects described above, since the cause score is calculated with reference to each of a plurality of reference data groups, a more probable cause can be identified.

Furthermore, according to the first embodiment, the cause score calculating unit 24 calculates the cause score by multiplying the outlier score, the relationship weight, and the property weight by each other. As a result, in addition to the effects described above, the cause score can be calculated as a value proportional to the outlier score, the relationship weight, and the property weight.

In addition, according to the first embodiment, the property weight calculating unit 23 calculates the degree of match as the property weight based on the residual between the theoretical value of the objective variable of the reference data group calculated by the estimation model for the second distribution and the actual measured value of the objective variable of the target data. As a result, in addition to the effects described above, the degree of match corresponding to the weight of the residual between the theoretical value and the actual measured value can be calculated as the property weight. For example, in a case where the residual is small, the weight of the residual is large, and the target data has a property similar to that of the reference data group. In addition, in a case where the residual is large, the weight of the residual is small, and the target data has a property different from that of the reference data group. Therefore, such a property of the target data can be reflected in the cause score.

In addition, according to the first embodiment, the estimation model is a linear regression model or a nonlinear regression model. As a result, in addition to the effects described above, the estimation model for estimating the objective variable of the reference data group can be easily implemented by a regression method such as a linear regression model or a nonlinear regression model.

In addition, according to the first embodiment, each of the outlier scores is a Z score, a score based on the Hotelling's T2 method, or a score based on kernel density estimation. As a result, in addition to the effects described above, each of the outlier scores can be implemented by various statistical methods.

Furthermore, according to the first embodiment, each of the relationship weights is an absolute value of a correlation coefficient, a correlation coefficient, a maximum information coefficient, or a cosine similarity. As a result, in addition to the effects described above, each of the relationship weights can be implemented by various statistical methods.

(Second Embodiment)

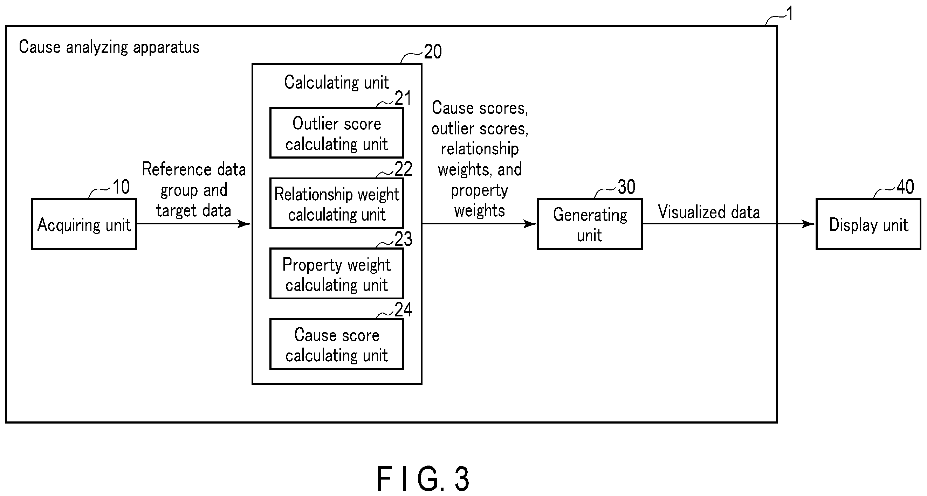

FIG. 3 is a block diagram illustrating a cause analyzing apparatus and a peripheral configuration of the cause analyzing apparatus according to a second embodiment. In FIG. 3, the same portions as those illustrated in FIG. 1 are denoted by the same reference signs as those illustrated in FIG. 1 and detailed description thereof is omitted. Portions different from the first embodiment will be mainly described. In the following embodiments, redundant description is similarly omitted.

The cause analyzing apparatus 1 further includes a generating unit 30 that generates visualized data to be displayed, as compared with the configuration illustrated in FIG. 1.

The generating unit 30 generates the visualized data in the form of a diagram and a table in which a result of a cause score can be interpreted due to the visualization. The generating unit 30 controls the display order and display content of the visualized data. Specifically, for example, the generating unit 30 generates visualized data that visualizes and represents information including an index including at least a cause score among an outlier score, a relationship weight, a property weight, and the cause score, and an objective variable Yi and an explanatory variable Xj of target data corresponding to the cause score. The generating unit 30 may generate visualized data including a display mode according to the cause score. The generating unit 30 may generate visualized data including a display mode in which two or more explanatory variables Xj are ranked according to cause scores. This display mode may be a mode of hiding or suppressing display of an explanatory variable ranked lower than a predetermined rank among the ranked explanatory variables Xj. The generating unit 30 may generate visualized data including a display mode for highlighting an index included in the information and deviating from an allowable range. In addition, in a case where the outlier score and the relationship weight among the indices are within the allowable range and the property weight deviates from the allowable range and is small, the generating unit 30 may generate visualized data including a display mode for highlighting the property weight to prompt to check an unknown abnormality.

In addition to the functions described above, a display unit 40 is controlled by the generating unit 30 and displays the visualized data received from the generating unit 30.

Other configurations are the same as those described in the first embodiment.

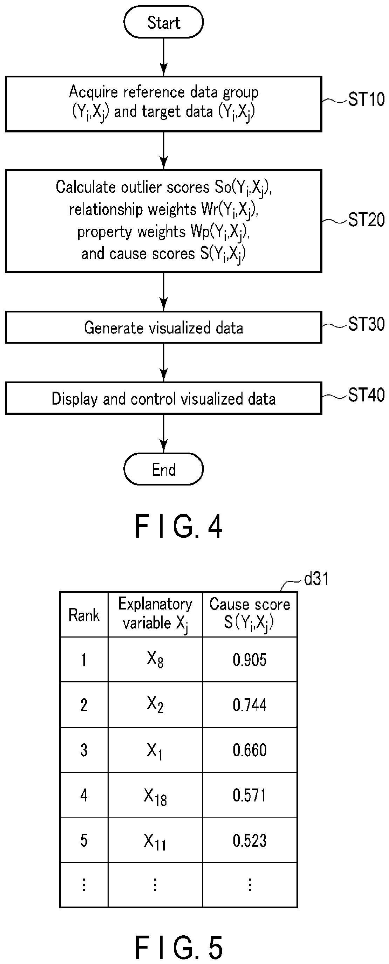

Next, an operation of the cause analyzing apparatus configured as described above will be described with reference to the flowchart of FIG. 4 and schematic diagrams of FIGS. 5 to 8.

Similarly to the above, it is assumed that outlier scores So(Yi, Xj), relationship weights Wr(Yi, Xj), property weights Wp(Yi, Xj), and cause scores S(Yi, Xj) are calculated by the execution of steps ST10 to ST20. A calculating unit 20 transmits the outlier scores So(Yi, Xj), the relationship weights Wr(Yi, Xj), the property weights Wp(Yi, Xj), and the cause scores S(Yi, Xj) to the generating unit 30. In addition, the calculating unit 20 transmits information including an objective variable Yi and explanatory variables Xj of target data corresponding to the cause scores to the generating unit 30. For example, the calculating unit 20 may transmit information including a reference data group and the target data to the generating unit 30.

(Step ST30)

After step ST20, in step ST30, the generating unit 30 generates visualized data based on the information received from the calculating unit 20. That is, the generating unit 30 generates the visualized data based on the information including an index including at least a cause score among an outlier score, a relationship weight, a property weight, and the cause score, and the objective variable Yi and an explanatory variable Xj of the target data corresponding to the cause score. In this case, the generating unit 30 may generate visualized data including a display mode according to the cause score, such as ranking display. In addition, the generating unit 30 may generate visualized data including a display mode for highlighting an index deviating from the allowable range. Thereafter, the generating unit 30 outputs the visualized data to the display unit 40.

(Step ST40)

After step ST30, in step ST40, the display unit 40 displays the visualized data received from the generating unit 30. As a result, a user visually recognizes the indices included in the visualized data being displayed and the objective variable Yi and the explanatory variables Xj of the target data, and checks the cause of a change in the objective variable Yi.

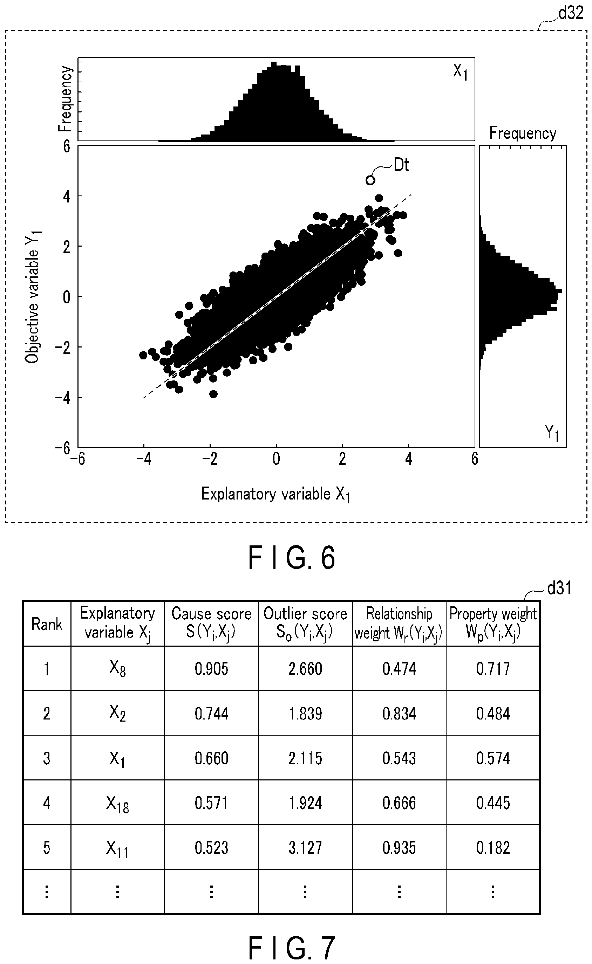

Next, the visualized data generated and displayed in steps ST30 to ST40 will be supplementarily described with reference to FIGS. 6 to 8.

The number of cause scores S(Yi, Xj) displayable in the visualized data is equal to the number of combinations of the objective variable Yi and the explanatory variables Xj. Although the cause scores S (Yi, Xj) may be displayed in the order of acquisition of the explanatory variables Xj, it is preferable to display the cause scores in a ranking format from the viewpoint of checking the explanatory variables Xj. For example, the user can check the cause of the change in the order of importance by checking the explanatory variables Xj in the order of ranking of the cause scores.

The visualized data is generated under the control of the display order and the display content by the generating unit 30. In addition, the visualized data may include tabular data, scatter diagram data, frequency distribution data, graph data, the objective variable Yi, the explanatory variables Xj, a date, and the like as appropriate.

For example, as illustrated in FIG. 5, tabular data d31 may indicate the cause scores S (Yi, Xj) in a ranking format in descending order of likelihood of relating to the cause of the change in the objective variable Yi. According to the tabular data d31, it is possible to check the cause of the change in the objective variable Yi in a display mode in which the two or more explanatory variables Xj are ranked according to the cause scores S(Yi, Xj) in the ranking format. As a result, the user can consider the cause of the change from the numerical data.

For example, as illustrated in FIG. 6, graph data d32 may include scatter diagram data of the reference data group and each piece of frequency distribution data of the explanatory variables Xj and the objective variable Yi in the reference data group. In FIG. 6, the scatter diagram data represents the relationship between the objective variable Y1 and the explanatory variable X1 of the reference data group with the vertical axis representing the value of Yi and the horizontal axis representing the value of Xj. The scatter diagram data includes an intersection point Dt of the objective variable Y1 and the explanatory variable Xj of the target data. Each piece of the frequency distribution data is a histogram representing the distribution of the explanatory variable X1 of the reference data group with the vertical axis representing the frequency and the horizontal axis representing the value of Xj, and a histogram representing the distribution of the objective variable Yi of the reference data group with the vertical axis representing the value of Yi and the horizontal axis representing the frequency. With the graph data d32, it is easy to intuitively understand how much the target data deviates from the reference data group, and it is possible to visually notify the user of the degree of change.

Alternatively, as illustrated in FIG. 7, the tabular data d31 may be generated based on information including an index including an outlier score, a relationship weight, a property weight, and a cause score, and the objective variable Yi and an explanatory variables Xj of the target data corresponding to the cause score. In addition, the generating unit 30 may generate visualized data d30 including a display mode for highlighting an index included in the information and deviating from the allowable range. For example, there is a possibility that the generating unit 30 can obtain additional information by using individual values calculated by the calculating unit 20. The generating unit 30 can generate the visualized data d30 in a display mode in which the obtained additional information is highlighted. For example, it is assumed that there is a case where an outlier score "3.127" and a relationship weight "0.935" are large and only a property weight "0.182" is small as in a row of an explanatory variable X11 ranked 5th in FIG. 7. In this case, there is a possibility that the row of the explanatory variable X11 ranked 5th indicates that the target data of the explanatory variable X11 tends to be different from the reference data group. As described above, in a case where the outlier score and the relationship weight among the indices are within the allowable range and the property weight deviates from the allowable range and is small, the generating unit 30 generates the visualized data including the display mode for highlighting the property weight to prompt to check an unknown abnormality. As the display mode of highlighting the index, a mark, an underline, or the like may be added to the index to be highlighted, or a format (bold, color, size, or the like) of the index may be changed. In this case, it is possible to further check a possibility of an unknown abnormality that is difficult to evaluate with the cause score based on the reference data group.

The format of the visualized data output by the generating unit 30 will be described. Visualized data representing an image is output in the form of drawing data. In addition, visualized data representing data other than images is output in a data format such as html, xml, json, or csv that can be displayed on the display unit 40.

The generating unit 30 can generate the visualized data according to the amount of information and the priority of an analysis result based on the cause scores S(Yi, Xj) of the explanatory variables Xj relating to the change in the objective variable Yi of the target data. The amount of information can be adjusted by, for example, displaying/hiding of data having a low cause score or displaying/hiding of an outlier score, a relationship weight, and a property weight in the tabular data d31. The priority can be adjusted, for example, in descending order or ascending order of the cause scores in the tabular data d31. One or both of the amount of information and the priority can be adjusted. At least in a case where the priority is adjusted, the user can monitor the explanatory variables Xj in order from the explanatory variable Xj expected to have a high relationship with the change in the objective variable Yi, so that it can be expected that the burden of monitoring and overlooking are reduced.

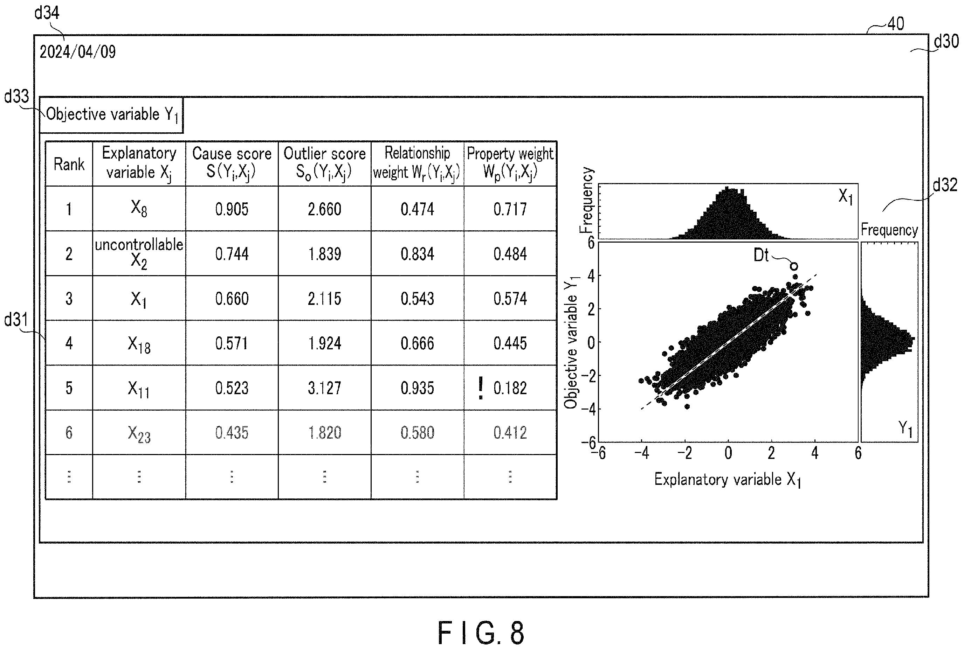

In addition, as illustrated in FIG. 8, the visualized data d30 may include the tabular data d31, the graph data d32, and the like. Note that the generating unit 30 may determine the amount of information to be displayed as the visualized data and the display thereof based on the cause scores.

In FIG. 8, the visualized data d30 includes information relating to the objective variable Yi and the explanatory variables Xj of the target data, and the cause scores S(Yi, Xj). Note that the visualized data d30 illustrated in FIG. 8 is data in an example of a case where one objective variable Yi is present. In a case where two or more objective variables Yi are present, the generating unit 30 may generate similar visualized data for all the objective variables Yi and display the visualized data side by side on the display unit 40. In a case where an index value for each objective variable Yi is calculated, each piece of visualized data may be arranged in an arrangement order based on the index values.

Specifically, for example, the visualized data d30 includes at least one of an objective variable name d33 representing the objective variable Yi, the tabular data d31 including one or more explanatory variables and one or more cause scores of the one or more explanatory variables, and scatter diagram data representing a relationship between the objective variable Yi and the one or more explanatory variables Xj. The visualized data d30 may further include key information d34 indicating an acquisition date of the target data. The key information d34 is a search key for searching for the target data from a database device (not illustrated) indicated in the warehouse information. The graph data d32 in the visualized data d30 includes the scatter diagram data and the frequency distribution data, but is not limited thereto, and the frequency distribution data may be omitted.

The tabular data d31 may include the outlier scores So(Yi, Xj), the relationship weights Wr(Yi, Xj), and the property weights Wp(Yi, Xj) used for calculating the cause scores, in addition to the cause scores S(Yi, Xj). Alternatively, the tabular data d31 may include only the cause scores S(Yi, Xj) as illustrated in FIG. 5.

In addition, the tabular data d31 does not need to include all the explanatory variables Xj and the cause scores S(Yi, Xj). In the tabular data d31, the number of rows to be displayed (the amount of information) may be adjusted based on the cause scores S(Yi, Xj). For example, in the tabular data d31, a row including the name of an explanatory variable Xj of which a cause score is equal to or greater than a predetermined threshold and the cause score of the explanatory variable Xj may be displayed, and a row including an explanatory variable Xj of which a cause score is less than the threshold and the cause score of the explanatory variable Xj may be hidden (omitted). Note that, in the tabular data d31, a row in which a cause score is less than the threshold may be completely hidden, or the display of the row may be suppressed such that, for example, a character color or the like in the row is made lighter, like a row of X23 ranked 6th. In addition, the threshold for the cause scores may be a value to be compared with each cause score, or may be a value to be compared with relative ranks of all the cause scores. In the latter case, the display mode of the tabular data d31 may be a mode in which the explanatory variable Xj ranked lower than the predetermined rank among the explanatory variables Xj ranked in the same manner as described above is hidden or the display of the explanatory variable Xj ranked lower than the predetermined rank is suppressed. The predetermined rank referred to herein is a relative rank threshold such as the top five ranks. In the tabular data d31, as described above, the display mode for highlighting an index may be used. For example, a mark "!" that highlights the property weight is provided in the row of X11 ranked 5th in the tabular data d31.

In addition, the tabular data d31 may separately display an element that can be controlled by a warehouse operator and an element that cannot be controlled. For example, a character string such as "uncontrollable" may be displayed in an uncontrollable element, such as a row of X2 ranked 2nd in FIG. 8. Alternatively, a character string such as "controllable" may be displayed in a controllable element. In addition, a symbol may be displayed in the controllable element or the uncontrollable element, or the controllable element and the uncontrollable element may be displayed in different colors.

The graph data d32 includes up to M data pieces for one objective variable Yi and one piece of the tabular data d31. The number M of data pieces is the number of explanatory variables Xj for one objective variable Yi. In the visualized data d30, M pieces of the graph data d32 may be arranged side by side, or a predetermined plurality of pieces of graph data less than M may be arranged. In addition, one piece of the graph data d32 may be selectively arranged in the visualized data d30. In this case, upon receiving an operation of selecting a row including an explanatory variable Xj in the tabular data d31, the generating unit 30 may update the visualized data d30 so as to switch to graph data d32 relating to the selected explanatory variable Xj.

In the scatter diagram data in the graph data d32, in a case where a relationship weight Wr(Yi, Xj) is smaller than a predetermined threshold Thr, the relationship weight Wr(Yi, Xj) may be highlighted. As the highlight display, for example, a region of an intersection of the objective variable Yi and the explanatory variable Xj relating to the relationship weight Wr(Yi, Xj) may be surrounded by red. In addition, as the highlight display, an explanatory variable name indicating the explanatory variable Xj relating to the relationship weight Wr(Yi, Xj) may be bolded, or a warning or caution mark may be displayed in red. In addition, in a case where the property weight Wp(Yi, Xj) is smaller than the predetermined threshold Thr, highlight display relating to the property weight Wp(Yi, Xj) may be performed in the same manner as described above.

As described above, according to the second embodiment, the generating unit 30 generates visualized data that visualizes and represents information including an index including at least a cause score among an outlier score, a relationship weight, a property weight, and the cause score, and an objective variable Yi and an explanatory variables Xj of target data corresponding to the cause score. Therefore, in addition to the effects described above, it is possible to visualize the result of analyzing a cause likelihood of a change in the objective variable Yi.

Furthermore, according to the second embodiment, the generating unit 30 may generate visualized data including a display mode according to the cause score. In this case, in addition to the effects described above, the display mode of the visualized data can be easily visually recognized according to the cause score.

According to the second embodiment, the target data includes one or more objective variables and two or more explanatory variables. The generating unit 30 may generate visualized data including a display mode in which two or more explanatory variables Xj are ranked according to cause scores. In this case, the ranked explanatory variables can be visualized and represented according to the cause scores.

In addition, according to the second embodiment, the display mode may be a mode of hiding an explanatory variable ranked lower than the predetermined rank among the ranked explanatory variables or suppressing display of the explanatory variable ranked lower than the predetermined rank among the ranked explanatory variables. In this case, since the user does not need to check an explanatory variable that is unlikely to be the cause, the load on the user can be reduced.

Furthermore, according to the second embodiment, the generating unit 30 may generate visualized data including a display mode for highlighting an index included in the information and deviating from the allowable range. In this case, in addition to the effects described above, the user can easily visually recognize the highlighted index.

Furthermore, according to the second embodiment, in a case where the outlier score and the relationship weight among the indices are within the allowable range, and the property weight deviates from the allowable range and is small, the generating unit 30 may generate visualized data including a display mode for highlighting the property weight to prompt to check an unknown abnormality. In this case, in addition to the effects described above, the user can check whether or not an unknown abnormality is present in the explanatory variable relating to the small property weight deviating from the allowable range.

(Third Embodiment)

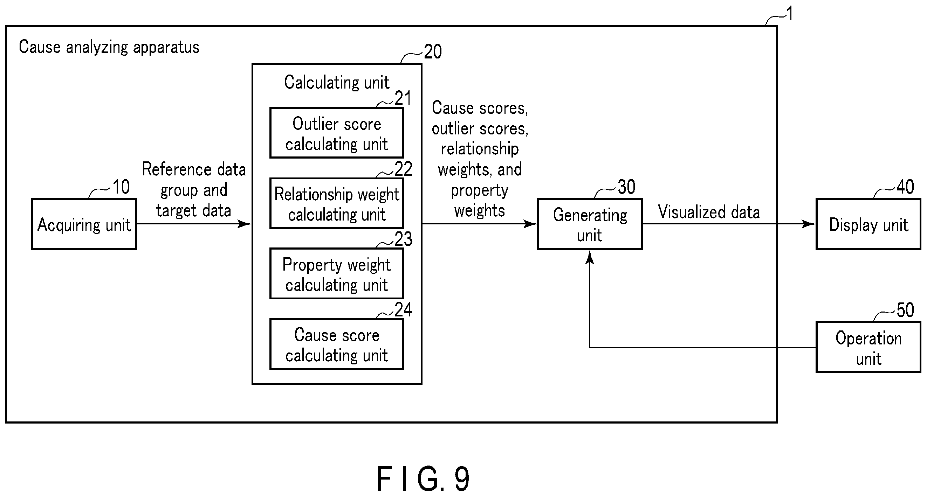

FIG. 9 is a block diagram illustrating a cause analyzing apparatus and a peripheral configuration of the cause analyzing apparatus according to a third embodiment. The cause analyzing apparatus 1 further includes an operation unit 50 that receives a user's operation, as compared with the configuration illustrated in FIG. 3.

Along with this, a generating unit 30 updates visualized data according to the received operation, in addition to the functions described above. The generating unit 30 may update the visualized data to a display mode in which a part of the information is displayed or hidden. The part of the information may include at least one of tabular data d31 relating to indices and scatter diagram data relating to a second distribution and target data. Further, the part of the information may include at least one of the tabular data d31 relating to the indices and graph data d32. In addition, the generating unit 30 may update the visualized data to a display mode in which the arrangement order of the indices is changed. Furthermore, the generating unit 30 may change the arrangement order of the indices according to any of descending order or ascending order of cause scores, descending order or ascending order of outlier scores, descending order or ascending order of relationship weights, and descending or ascending order of property weights.

Other configurations are the same as those described in the second embodiment.

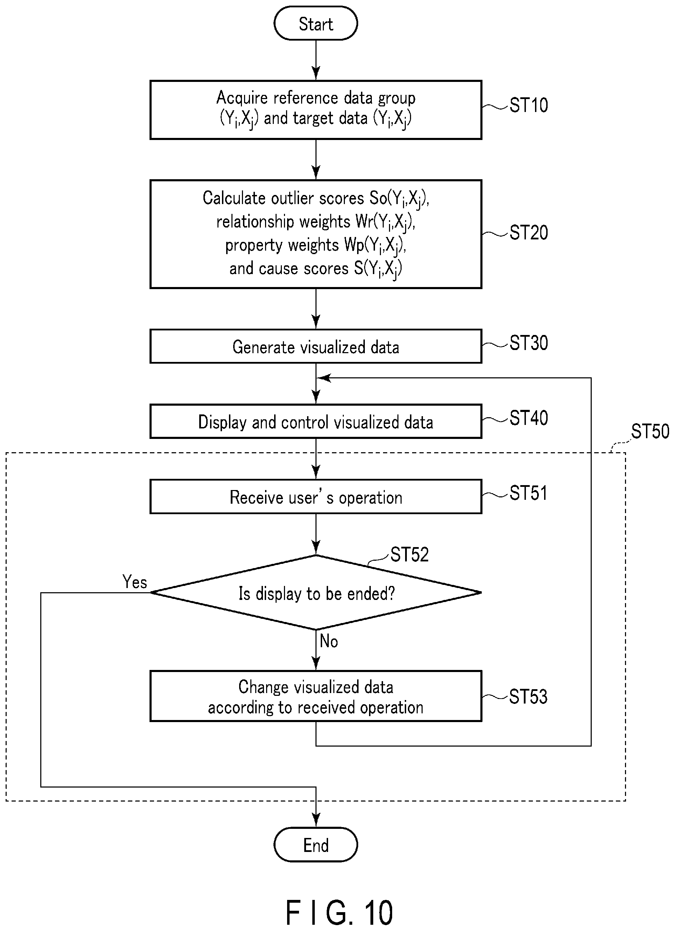

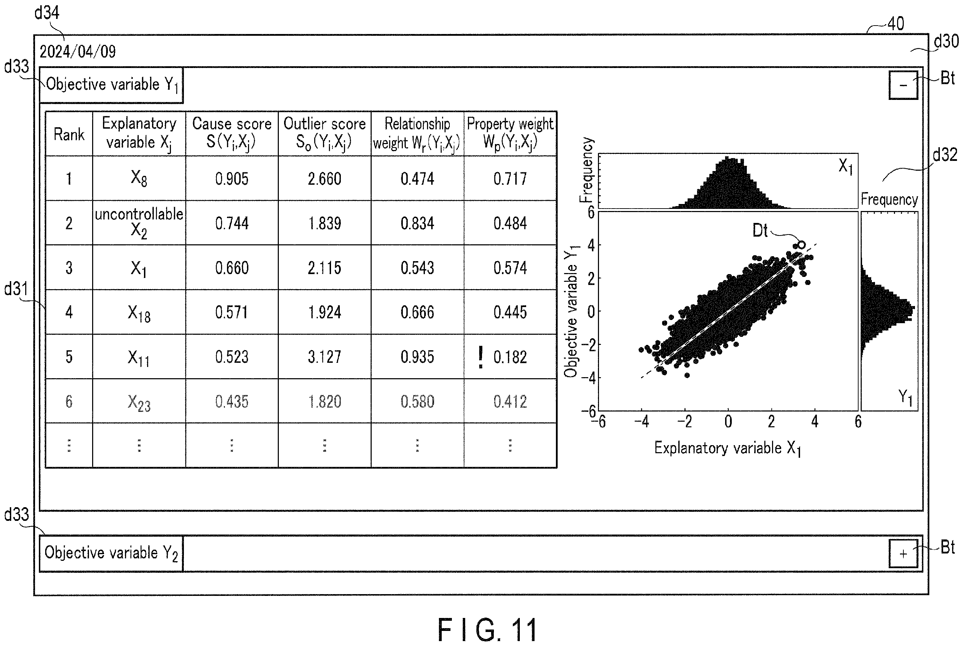

Next, an operation of the cause analyzing apparatus configured as described above will be described with reference to a flowchart of FIG. 10 and schematic diagrams of FIGS. 11 to 14.

Now, similarly to the above description, it is assumed that the visualized data is displayed on a display unit 40 by the execution of steps ST10 to ST40.

(Step ST50)

After step ST40, the generating unit 30 executes step ST50 of updating the visualized data according to an operation of the operation unit 50 by the user. Step ST50 includes steps ST51 to ST53.

In step ST51, the operation unit 50 receives a user's operation. The operation unit 50 inputs an operation signal corresponding to the received operation to the generating unit 30.

In step ST52, the generating unit 30 determines whether or not to end the display according to the received operation, and in a case where the generating unit 30 determines to end the display, the generating unit 30 controls the display unit 40 to end the display of the visualized data. For example, the generating unit 30 determines whether or not the operation signal corresponding to the received operation is an end command, and controls the display unit 40 according to a result of the determination. On the other hand, as a result of this determination, in a case where the generating unit 30 determines not to end the display, the generating unit 30 advances the process to step ST53.

In step ST53, the generating unit 30 changes the visualized data according to the received operation. For example, the generating unit 30 identifies the content of the operation signal corresponding to the received operation, and re-generates the visualized data according to the identification result. After completion of step ST53, the cause analyzing apparatus 1 returns the process to step ST40 and repeatedly executes the processing in steps ST40 to ST50.

Next, an example of the visualized data used in step ST53 will be described with reference to FIGS. 11 to 14.

In the example illustrated in FIG. 11, the visualized data d30 includes a change button Bt for changing the amount of information of the visualized data d30. For example, in a case where the amount of the information is large, the visualized data includes tabular data d31 and graph data d32 relating to an objective variable Yi, an objective variable name d33 of the objective variable Yi, and the change button Bt indicating "-" as a decrease in the amount of the information after the change. For example, in a case where the amount of the information is small, the visualized data does not include the tabular data d31 and the graph data d32, and includes the objective variable name d33 of the objective variable Yi, and the change button Bt indicating "+" as an increase in the amount of the information after the change. Note that the present invention is not limited thereto, and the visualized data having a low information amount may further include explanatory variable names of explanatory variables Xj and at least index values of the cause scores. In the change button Bt, the notation "-" and "+" that indicates the decrease and increase in the amount of information after the changes may be omitted.

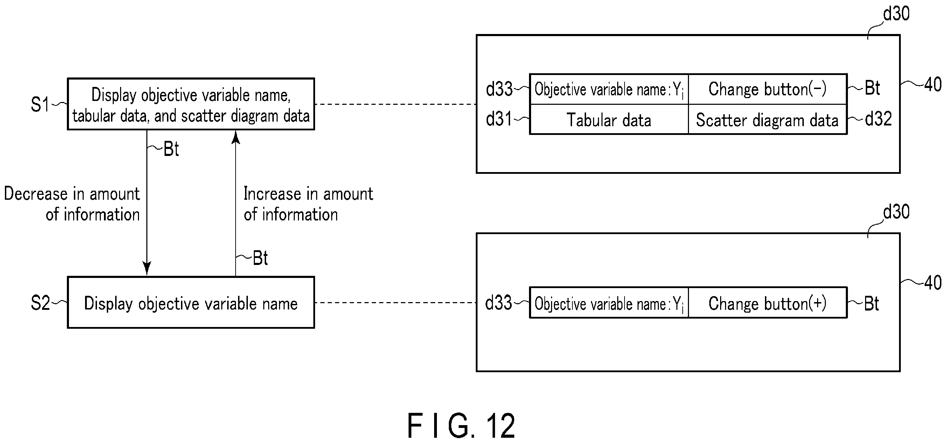

In this case, as illustrated in FIG. 12, the generating unit 30 changes the visualized data d30 so as to increase or decrease the amount of the information according to an operation of the change button Bt. A state S1 in which the amount of the information has increased and a state S2 in which the amount of the information has decreased differ in whether or not the visualized data d30 includes the tabular data d31 and the graph data d32. In this manner, the visualized data d30 after the amount of the information is increased or decreased is displayed on the display unit 40.

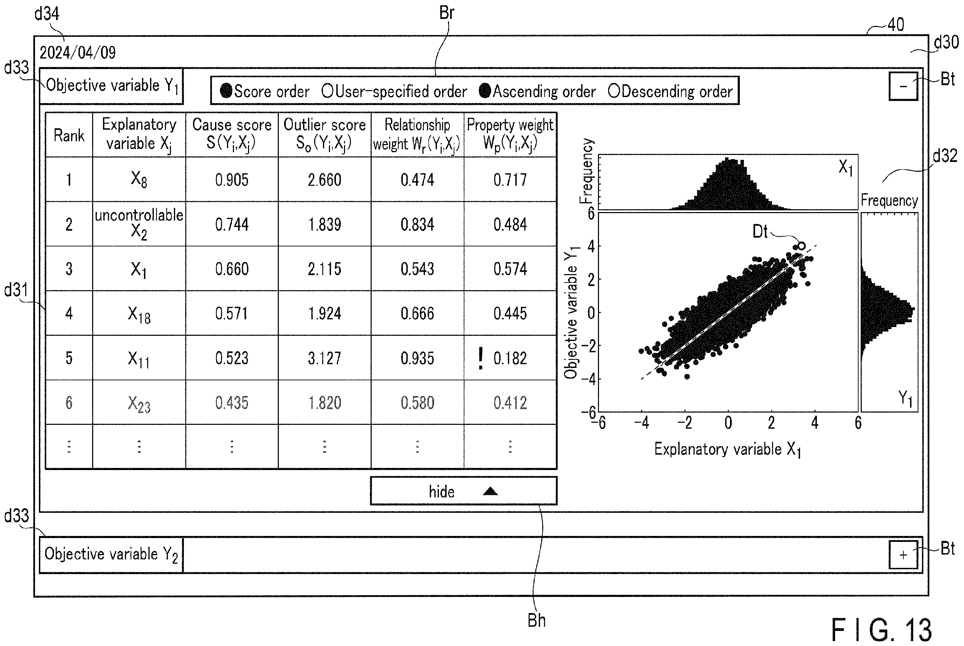

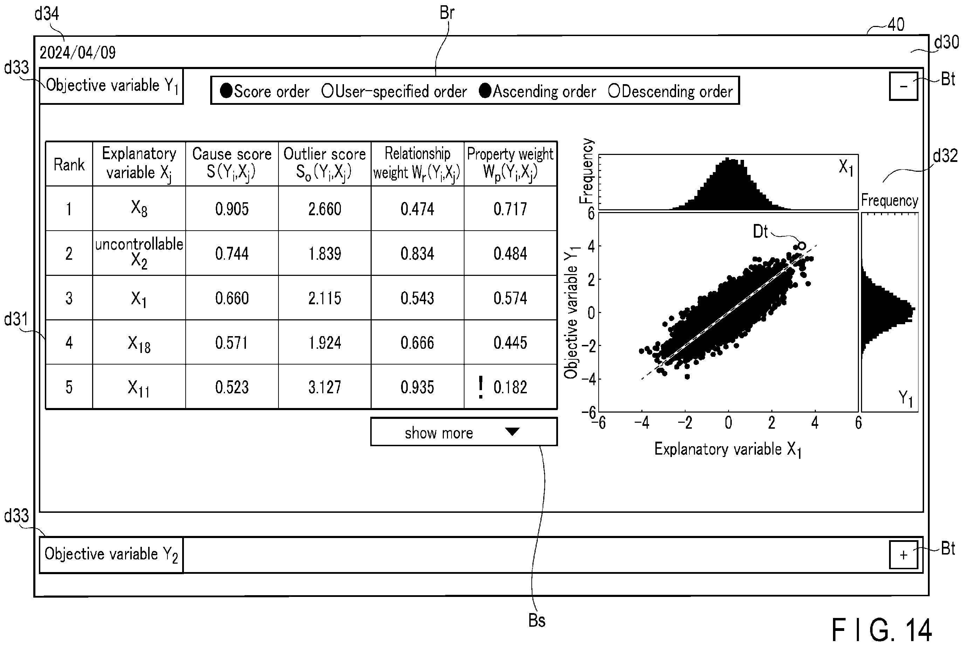

Next, examples of the visualized data d30 illustrated in FIGS. 13 and 14 will be described. The visualized data d30 further includes a hide button Bh and a show more button Bs for changing the amount of the information and a radio button Br for changing the arrangement order of the information, as compared with the example illustrated in FIG. 11. The hide button Bh is a button for instructing a decrease in the amount of information of the tabular data d31. The show more button Bs is a button for instructing an increase in the amount of the information of the tabular data d31. The radio button Br is a button for selecting the arrangement order of the information of the tabular data d31. Instead of the radio button Br, an interface such as a check box or a pull-down menu may be used.

First, operations relating to the hide button Bh and the show more button Bs for changing the amount of information among the hide button Bh, the show more button Bs, and the radio button Br will be described.

In a case where the amount of the information is large, as illustrated in FIG. 13, the display unit 40 displays the visualized data d30 including the tabular data d31 relating to the explanatory variables Xj corresponding to the cause scores S(Yi, Xj) of all ranks and the hide button Bh.

In a case where the amount of the information is small, as illustrated in FIG. 14, the display unit 40 displays the visualized data d30 including the tabular data d31 relating to the explanatory variables Xj corresponding to the top five cause scores S (Yi, Xj) and the show more button Bs. Note that the top five ranks are an example, and may be changed to other ranks.

In this case, in FIG. 13, the generating unit 30 changes the visualized data d30 so as to reduce the amount of the information according to an operation of the hide button Bh. As a result, as illustrated in FIG. 14, the visualized data d30 having a small information amount is displayed on the display unit 40. In addition, in FIG. 14, the generating unit 30 changes the visualized data d30 so as to increase the amount of the information according to an operation of the show more button Bs. As a result, as illustrated in FIG. 13, the visualized data d30 having a large information amount is displayed on the display unit 40. That is, the generating unit 30 changes the tabular data d31 so as to increase and decrease the amount of the information of the visualized data d30 according to the operations of the hide button Bh and the show more button Bs. As a result, the visualized data d30 including the tabular data d31 after the amount of the information is increased or decreased and the hide button Bh or the show more button Bs for returning the amount of the information is displayed on the display unit 40.

Note that the invention is not limited thereto, and immediately after the operation of the show more button Bs, the generating unit 30 may display the tabular data d31 in a state in which information (hereinafter, referred to as low-order information) relating to an explanatory variable Xj corresponding to a cause score S(Yi, Xj) ranked lower than the top five ranks is folded.

In addition, the generating unit 30 may generate the tabular data d31 in a state where the low-order information is expanded according to the operation of the show more button Bs.

In addition, the generating unit 30 may generate tabular data d31 including information relating to the explanatory variables Xj corresponding to the top five ranks in descending order of the cause scores according to the operation of the show more button Bs.

In addition, the generating unit 30 may generate visualized data d31 including the tabular data d30 having a large information amount and the hide button Bh for returning the amount of information to a small information amount according to the operation of the show more button Bs.

Next, an operation relating to the radio button Br for changing the arrangement order of the information in the visualized data d30 will be described.

As illustrated in FIGS. 13 and 14, the display unit 40 displays the visualized data d30 including the radio button Br for selecting score order or user-specified order and ascending order or descending order. The operation unit 50 receives an operation of instructing the arrangement order of the information according to an operation of selecting the score order or the user-specified order and selecting the ascending order or the descending order.

The generating unit 30 generates the visualized data d30 in which the arrangement order of the information in the tabular data d31 is changed according to the operation of the radio button Br. As a result, the visualized data d30 including the tabular data d31 arranged in the instructed arrangement order is displayed on the display unit 40. In this manner, the priority of display can be changed by selecting the ascending order or the descending order. Furthermore, by selecting the score order and the user-specified order, information serving as a reference of the arrangement order can be changed. In FIGS. 13 and 14, the score order is the arrangement order of the explanatory variables Xj based on the minimum or maximum cause score. The score order is based on the maximum score in a case where the descending order is selected, and is based on the minimum score in a case where the ascending order is selected. In addition, the user-specified order is the arrangement order of the explanatory variables Xj based on the minimum or maximum value of an index specified by the user among the indices other than the cause scores. The user-specified order is based on the maximum value in a case where the user-specified order is descending order, and is based on the minimum value in a case where the user-specified order is ascending order. The generating unit 30 generates the visualized data d30 including the tabular data d31 in which the arrangement order is changed to any one of descending order of score, ascending order of score, the descending order specified by the user, and the ascending order specified by the user according to the operation of the radio button Br.

As described above, according to the third embodiment, the operation unit 50 receives a user's operation. The generating unit 30 updates the visualized data according to the received operation. Therefore, in addition to the effects of the second embodiment, the visualized data can be updated according to the user's operation.

Furthermore, according to the third embodiment, the generating unit 30 updates the visualized data to a display mode in which a part of the information included in the visualized data is displayed or hidden. Therefore, in addition to the effects described above, the amount of the information of the visualized data can be increased or decreased according to the user's operation.

According to the third embodiment, a part of the information includes at least one of the tabular data relating to the indices and the scatter diagram data relating to the second distribution and the target data. Therefore, in addition to the effects described above, it is possible to increase or decrease the amount of information of a part of the tabular data and the scatter diagram data included in the visualized data according to the user's operation.

In addition, according to the third embodiment, the generating unit 30 updates the visualized data to the display mode in which the arrangement order of the indices is changed. Therefore, in addition to the effects described above, since the arrangement order of the indices included in the visualized data can be changed, the priority of the indices for prompting checking can be changed. In addition, the user can not only preferentially monitor an explanatory variable Xj expected to have a high relationship with a change in the objective variable Yi, but also check a result of the analysis from various perspectives. For example, in a daily monitoring task, the user can properly use a display region to check an item expected to have a high relationship with an abnormality displayed first, and monitor an item having a relatively low relationship with an abnormality in a scene where detailed monitoring is required.

Furthermore, according to the third embodiment, the generating unit 30 changes the arrangement order of the indices according to any one of the descending order or ascending order of the cause scores, the descending order or ascending order of the outlier scores, the descending order or ascending order of the relationship weights, and the descending or ascending order of the property weights. Therefore, in addition to the effects described above, in a case where the user checks the cause, the cause scores and the indices used for calculating the cause scores can be rearranged.

(Modification of Third Embodiment)

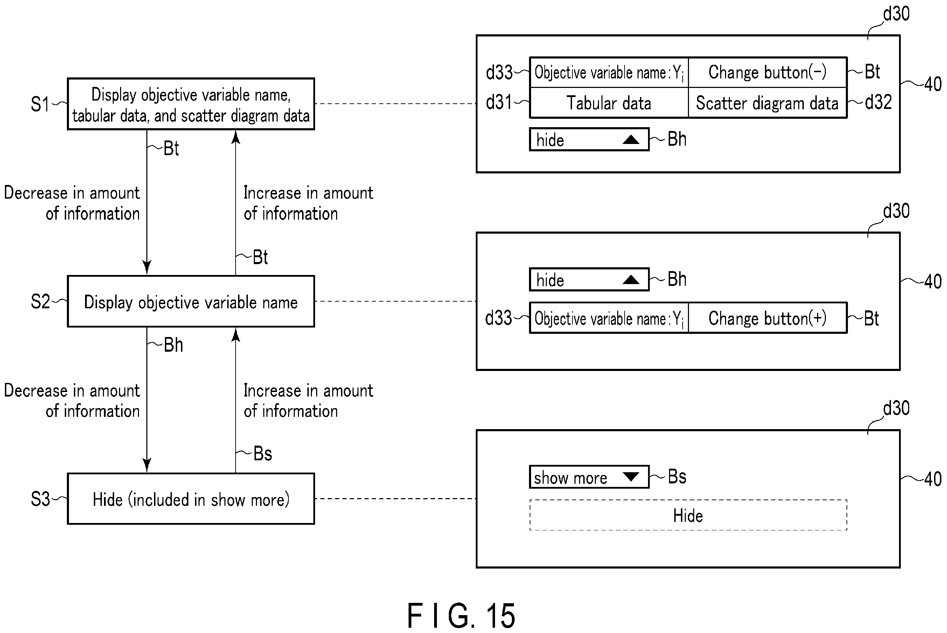

In the third embodiment, the amount of the information of the tabular data d31 is increased and decreased by the hide button Bh and the show more button Bs, but the present invention is not limited thereto. For example, as illustrated in FIG. 15, the generating unit 30 may generate the visualized data d30 so as to switch between hiding and displaying of the objective variable name d33 relating to the objective variable Yi and the information including the change button Bt by the hide button Bh and the show more button Bs. The state S2 in which the amount of information has decreased and a state S3 in which the amount of information has further decreased differ in whether or not the visualized data d30 includes the objective variable name d33 and the information including the change button Bt. In this manner, the visualized data d30 after the amount of the information is increased or decreased is displayed on the display unit 40. According to such a modification, in addition to the effects of the third embodiment, it is possible to generate the visualized data in the state S3 in which the amount of information has further decreased.

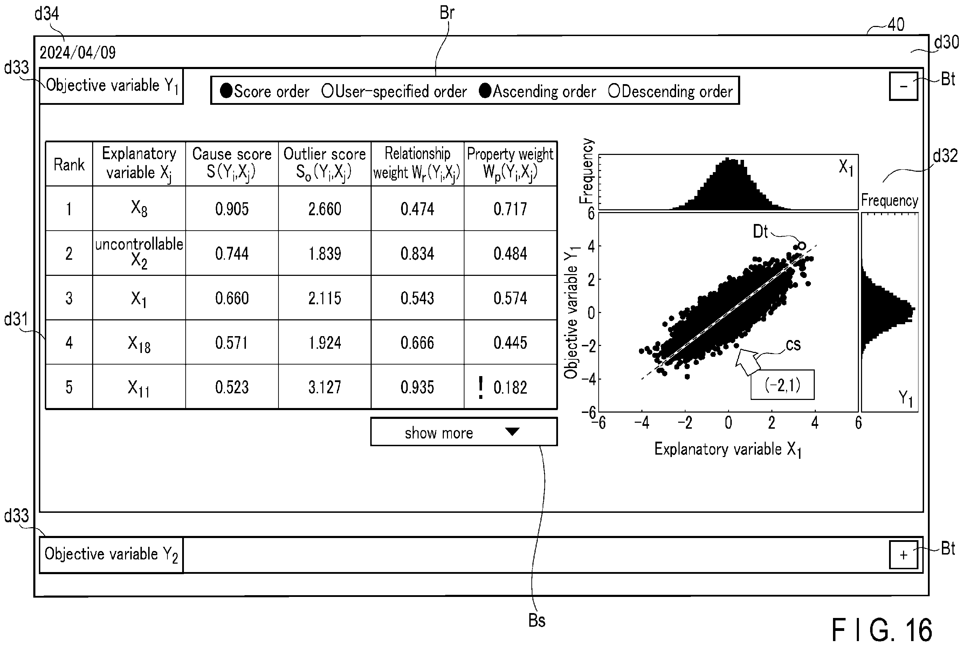

In the third embodiment, the detailed display of the graph data d32 has not been described, but the present invention is not limited thereto. For example, as illustrated in FIG. 16, when a cursor cs is placed on the graph data d32, the generating unit 30 generates the visualized data d30 including details of the data indicated by the cursor cs. The display unit 40 displays the generated visualized data d30. For example, when the generating unit 30 places the cursor cs on an element of the scatter diagram data of the graph data d32 according to a user's operation, the generating unit 30 generates the visualized data d30 including the value of the objective variable Yi, the values of the explanatory variables Xj, and the like of the element. The display unit 40 displays the generated visualized data d30. According to such a modification, in addition to the effects of the third embodiment, it is possible to generate the visualized data including detailed numerical values of the graph data d32 according to the user's operation.

In addition, in the third embodiment, the visualized data including both the controllable element and the uncontrollable element is generated, but the present invention is not limited thereto. For example, the generating unit 30 may generate visualized data including only one of the controllable element and the uncontrollable element according to a user's operation. The uncontrollable element is an index relating to the explanatory variable X2 and the explanatory variable X2 to which "uncontrollable" is attached. The controllable element is an explanatory variable Xj other than the uncontrollable element and an index of the explanatory variable Xj. According to such a modification, in addition to the effects of the third embodiment, it is possible to generate the visualized data including only one of the controllable element and the uncontrollable element according to a user's operation.

In addition, in the third embodiment, a threshold for the cause scores is not changed, but the present invention is not limited thereto. For example, the generating unit 30 may change the threshold for the cause scores according to a user's operation, and change a display target included in the tabular data d31 based on the changed threshold. According to such a modification, in addition to the effects of the third embodiment, it is possible to generate the visualized data in which the display target is changed according to the user's operation.

In addition, in the third embodiment, as the arrangement order of the cause scores, the descending order or ascending order of the scores and the descending order or ascending order of the user-specified order are exemplified, but the present invention is not limited thereto. For example, the generating unit 30 may change the arrangement order of the cause scores to an arbitrary order according to a user's operation. For example, the acquisition order of the explanatory variables Xj may be used as the arbitrary order. Alternatively, as the arbitrary order, the order of differences between values obtained by multiplying the outlier scores by the relationship weights and the property weights may be used. That is, the generating unit 30 may sort the cause scores in an arrangement order based on values not included in the tabular data d31. According to such a modification, in addition to the effects of the third embodiment, it is possible to generate the visualized data in which the arrangement order of the cause scores is changed in an arbitrary order according to a user's operation.

In the third embodiment, the visualized data in which the state and the arrangement order of the amount of information relating to the objective variable Y1 are changed is generated, but the present invention is not limited thereto, and the objective variable Yi may be specified according to a user's operation. That is, the generating unit 30 may generate the visualized data in which the state and the arrangement order of the amount of information relating to the specified objective variable Yi are changed. According to such a modification, in addition to the effects of the third embodiment, by specifying the objective variable Yi according to a user's operation, it is possible to generate the visualized data relating to the specified objective variable Yi.

(Fourth Embodiment)

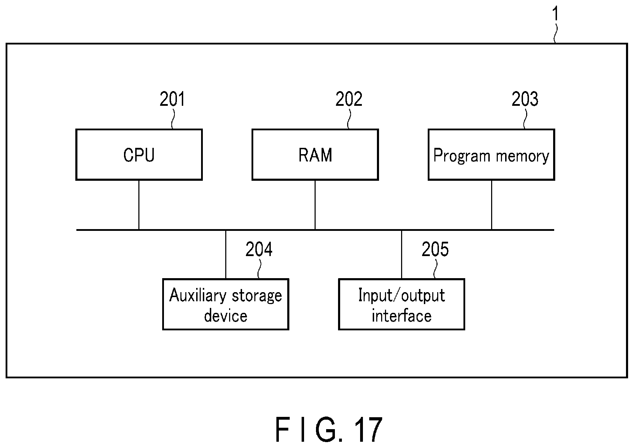

FIG. 17 is a block diagram illustrating a hardware configuration of a cause analyzing apparatus according to a fourth embodiment. The fourth embodiment is a specific example of the first to third embodiments, and has a form in which the cause analyzing apparatus 1 is implemented by a computer.

The cause analyzing apparatus 1 includes, as hardware, a central processing unit (CPU) 201, a random access memory (RAM) 202, a program memory 203, an auxiliary storage device 204, and an input/output interface 205. The CPU 201 communicates with the RAM 202, the program memory 203, the auxiliary storage device 204, and the input/output interface 205 via a bus. That is, the cause analyzing apparatus 1 according to the present embodiment is implemented by a computer having such a hardware configuration.

The CPU 201 is an example of a general-purpose processor. The RAM 202 is used as a working memory for the CPU 201. The RAM 202 includes a volatile memory such as a synchronous dynamic random access memory (SDRAM). The program memory 203 stores a cause analysis program for implementing each unit according to each embodiment. The cause analysis program may be, for example, a program for causing a computer to implement each function of the acquiring unit 10, the calculating unit 20, and the generating unit 30. Furthermore, as the program memory 203, for example, a read-only memory (ROM), a part of the auxiliary storage device 204, or a combination thereof is used. The auxiliary storage device 204 non-temporarily stores data. The auxiliary storage device 204 includes a nonvolatile memory such as a hard disc drive (HDD) or a solid state drive (SSD).

The input/output interface 205 is an interface for connecting to another device. The input/output interface 205 is used, for example, to connect an operation unit 50 such as a keyboard and a mouse, a database device (not illustrated) that stores reference group data and target data, and a display unit 40 such as a display.

The cause analysis program stored in the program memory 203 includes a computer-executable instruction. When a data analysis program (computer-executable instruction) is executed by the CPU 201 which is a processing circuit, the data analysis program causes the CPU 201 to execute predetermined processing. For example, when the cause analysis program is executed by the CPU 201, the cause analysis program causes the CPU 201 to execute the series of processes described for each unit illustrated in FIG. 1, FIG. 3, or FIG. 9. For example, when the computer-executable instruction included in the cause analysis program is executed by the CPU 201, the computer-executable instruction causes the CPU 201 to execute a cause analysis method. The cause analysis method may include each operation corresponding to each function of the acquiring unit 10, the calculating unit 20, and the generating unit 30 described above. In addition, the cause analysis method may include each operation illustrated in FIG. 2, FIG. 4, FIG. 10, FIG. 12, or FIG. 15 as appropriate.

The cause analysis program may be provided to the cause analyzing apparatus 1 that is a computer in a state in which the cause analysis program is stored in a computer-readable storage medium. In this case, for example, the cause analyzing apparatus 1 further includes a drive (not illustrated) that reads data from the storage medium, and acquires the cause analysis program from the storage medium. As the storage medium, for example, a magnetic disk, an optical disc (CD-ROM, CD-R, DVD-ROM, DVD-R, or the like), a magneto-optical disc (MO or the like), a semiconductor memory, or the like can be appropriately used. The storage medium may be referred to as a non-transitory computer readable storage medium. In addition, the cause analysis program may be stored in a server on a communication network, and the cause analyzing apparatus 1 may download the cause analysis program from the server using the input/output interface 205.

The processing circuit that executes the cause analysis program is not limited to a general-purpose hardware processor such as the CPU 201, and a dedicated hardware processor such as an application specific integrated circuit (ASIC) may be used as the processing circuit. The processing circuit (processing unit) includes at least one general-purpose hardware processor, at least one dedicated hardware processor, or a combination of at least one general-purpose hardware processor and at least one dedicated hardware processor. In the example illustrated in FIG. 17, the CPU 201, the RAM 202, and the program memory 203 correspond to the processing circuit.

According to at least one of the embodiments described above, when a change to an abnormal state occurs independently, it is possible to identify a cause of the change.

While certain embodiments have been described, these arrangements have been presented by way of example only, and are not intended to limit the scope of the claims. Indeed, the apparatuses described herein may be embodied in a variety of other forms; furthermore, various omissions, substitutions and changes in the form of the apparatuses described herein may be made.

Several approaches relevant to the present disclosure are given below.

1. A cause analyzing apparatus (1) comprising:

an acquiring unit (10) configured to acquire a reference data group including an objective variable and an explanatory variable, and target data including an objective variable and an explanatory variable;
an outlier score calculating unit (21) configured to calculate an outlier score indicating a degree of deviation of the explanatory variable of the target data from a first distribution relating to the explanatory variable of the reference data group;

a relationship weight calculating unit (22) configured to calculate a relationship weight representing strength of a relationship between the objective variable and the explanatory variable of the reference data group;

a property weight calculating unit (23) configured to calculate a property weight representing a degree of match between values of the objective variable and the explanatory variable of the target data, and a second distribution relating to the objective variable and the explanatory variable of the reference data group; and

a cause score calculating unit (24) configured to calculate a cause score of the explanatory variable for a change in the objective variable of the target data based on the outlier score, the relationship weight, and the property weight.

2. The cause analyzing apparatus according to clause 1, wherein

the reference data group includes two or more pieces of reference data including one or more objective variables and two or more explanatory variables,

the target data includes one or more objective variables and two or more explanatory variables, and

the cause score calculating unit (24) is configured to calculate the cause score for each combination of one objective variable and one explanatory variable in the target data.

3. The cause analyzing apparatus according to clause 1, wherein the cause score calculating unit (24) is configured to calculate the cause score by multiplying the outlier score, the relationship weight, and the property weight by each other.

4. The cause analyzing apparatus according to clause 1, further comprising a generating unit (30) configured to generate visualized data that visualizes and represents information including an index including at least the cause score among the outlier score, the relationship weight, the property weight, and the cause score, and the objective variable and the explanatory variable of the target data corresponding to the cause score.

5. The cause analyzing apparatus according to clause 4, wherein the generating unit (30) is configured to generate the visualized data including a display mode according to the cause score.

6. The cause analyzing apparatus according to clause 5, wherein

the target data includes one or more objective variables and two or more explanatory variables, and

the generating unit (30) is configured to generate the visualized data including a display mode in which the two or more explanatory variables are ranked according to the cause score.

7. The cause analyzing apparatus according to clause 6, wherein the display mode is a mode of hiding or suppressing display of an explanatory variable ranked lower than a predetermined rank among the ranked explanatory variables.

8. The cause analyzing apparatus according to clause 4, wherein the generating unit (30) is configured to generate the visualized data including a display mode for highlighting an index included in the information and deviating from an allowable range.

9. The cause analyzing apparatus according to clause 8, wherein the generating unit (30) is configured to generate the visualized data including a display mode for highlighting the property weight to prompt to check an unknown abnormality in a case where the outlier score and the relationship weight among the indices are within the allowable range and the property weight deviates from the allowable range and is small.

10. The cause analyzing apparatus according to clause 1, wherein the property weight calculating unit (23) is configured to calculate the degree of match as the property weight based on a residual between a theoretical value of the objective variable of the reference data group calculated by an estimation model for the second distribution and an actual measured value of the objective variable of the target data.

11. The cause analyzing apparatus according to clause 10, wherein the estimation model is a linear regression model or a nonlinear regression model.

12. The cause analyzing apparatus according to clause 1, wherein the outlier score is a Z score, a score based on a Hotelling's T2 method, or a score based on kernel density estimation.

13. The cause analyzing apparatus according to clause 1, wherein the relationship weight is an absolute value of a correlation coefficient, a correlation coefficient, a maximum information coefficient, or a cosine similarity.

14. The cause analyzing apparatus according to clause 4, further comprising an operation unit (50) configured to receive a user's operation, wherein the generating unit (30) is configured to update the visualized data in accordance with the received operation.

15. The cause analyzing apparatus according to clause 14, wherein the generating unit (30) is configured to update the visualized data to a display mode in which a part of the information is displayed or hidden.

16. The cause analyzing apparatus according to clause 15, wherein the part of the information includes at least one of tabular data relating to the index and scatter diagram data relating to the second distribution and the target data.

17. The cause analyzing apparatus according to clause 14, wherein the generating unit (30) is configured to update the visualized data to a display mode in which an arrangement order of the index is changed.

18. The cause analyzing apparatus according to clause 17, wherein the generating unit (30) is configured to change the arrangement order of the index according to any one of descending order or ascending order of the cause score, descending order or ascending order of the outlier score, descending order or ascending order of the relationship weight, and descending order or ascending order of the property weight.

19. A cause analysis method comprising:

acquiring a reference data group including an objective variable and an explanatory variable, and target data including an objective variable and an explanatory variable;

calculating an outlier score indicating a degree of deviation of the explanatory variable of the target data from a first distribution relating to the explanatory variable of the reference data group;

calculating a relationship weight representing strength of a relationship between the objective variable and the explanatory variable of the reference data group;

calculating a property weight representing a degree of match between values of the objective variable and the explanatory variable of the target data, and a second distribution relating to the objective variable and the explanatory variable of the reference data group; and

calculating a cause score of the explanatory variable for a change in the objective variable of the target data based on the outlier score, the relationship weight, and the property weight.

20. A program including computer executable instructions, wherein the instructions, when executed by a processor, cause the processor to perform a method comprising:

acquiring a reference data group including an objective variable and an explanatory variable, and target data including an objective variable and an explanatory variable;

calculating an outlier score indicating a degree of deviation of the explanatory variable of the target data from a first distribution relating to the explanatory variable of the reference data group;

calculating a relationship weight representing strength of a relationship between the objective variable and the explanatory variable of the reference data group;

calculating a property weight representing a degree of match between values of the objective variable and the explanatory variable of the target data, and a second distribution relating to the objective variable and the explanatory variable of the reference data group; and

calculating a cause score of the explanatory variable for a change in the objective variable of the target data based on the outlier score, the relationship weight, and the property weight.

**Claims**

1. A cause analyzing apparatus (1) comprising:

an acquiring unit (10) configured to acquire a reference data group including an objective variable and an explanatory variable, and target data including an objective variable and an explanatory variable;

an outlier score calculating unit (21) configured to calculate an outlier score indicating a degree of deviation of the explanatory variable of the target data from a first distribution relating to the explanatory variable of the reference data group;

a relationship weight calculating unit (22) configured to calculate a relationship weight representing strength of a relationship between the objective variable and the explanatory variable of the reference data group;

a property weight calculating unit (23) configured to calculate a property weight representing a degree of match between values of the objective variable and the explanatory variable of the target data, and a second distribution relating to the objective variable and the explanatory variable of the reference data group; and

a cause score calculating unit (24) configured to calculate a cause score of the explanatory variable for a change in the objective variable of the target data based on the outlier score, the relationship weight, and the property weight.

2. The cause analyzing apparatus according to claim 1, wherein

the reference data group includes two or more pieces of reference data including one or more objective variables and two or more explanatory variables,

the target data includes one or more objective variables and two or more explanatory variables, and

the cause score calculating unit (24) is configured to calculate the cause score for each combination of one objective variable and one explanatory variable in the target data.

3. The cause analyzing apparatus according to claim 1, wherein the cause score calculating unit (24) is configured to calculate the cause score by multiplying the outlier score, the relationship weight, and the property weight by each other.

4. The cause analyzing apparatus according to claim 1, further comprising a generating unit (30) configured to generate visualized data that visualizes and represents information including an index including at least the cause score among the outlier score, the relationship weight, the property weight, and the cause score, and the objective variable and the explanatory variable of the target data corresponding to the cause score.

5. The cause analyzing apparatus according to claim 4, wherein the generating unit (30) is configured to generate the visualized data including a display mode according to the cause score.

6. The cause analyzing apparatus according to claim 5, wherein

the target data includes one or more objective variables and two or more explanatory variables, and

the generating unit (30) is configured to generate the visualized data including a display mode in which the two or more explanatory variables are ranked according to the cause score.

7. The cause analyzing apparatus according to claim 6, wherein the display mode is a mode of hiding or suppressing display of an explanatory variable ranked lower than a predetermined rank among the ranked explanatory variables.

8. The cause analyzing apparatus according to claim 4, wherein the generating unit (30) is configured to generate the visualized data including a display mode for highlighting an index included in the information and deviating from an allowable range.

9. The cause analyzing apparatus according to claim 8, wherein the generating unit (30) is configured to generate the visualized data including a display mode for highlighting the property weight to prompt to check an unknown abnormality in a case where the outlier score and the relationship weight among the indices are within the allowable range and the property weight deviates from the allowable range and is small.

10. The cause analyzing apparatus according to claim 1, wherein the property weight calculating unit (23) is configured to calculate the degree of match as the property weight based on a residual between a theoretical value of the objective variable of the reference data group calculated by an estimation model for the second distribution and an actual measured value of the objective variable of the target data.

11. The cause analyzing apparatus according to claim 10, wherein the estimation model is a linear regression model or a nonlinear regression model.

12. The cause analyzing apparatus according to claim 1, wherein the outlier score is a Z score, a score based on a Hotelling's T2 method, or a score based on kernel density estimation.

13. The cause analyzing apparatus according to claim 1, wherein the relationship weight is an absolute value of a correlation coefficient, a correlation coefficient, a maximum information coefficient, or a cosine similarity.

14. The cause analyzing apparatus according to claim 4, further comprising an operation unit (50) configured to receive a user's operation, wherein the generating unit (30) is configured to update the visualized data in accordance with the received operation.

15. The cause analyzing apparatus according to claim 14, wherein the generating unit (30) is configured to update the visualized data to a display mode in which a part of the information is displayed or hidden.

16. The cause analyzing apparatus according to claim 15, wherein the part of the information includes at least one of tabular data relating to the index and scatter diagram data relating to the second distribution and the target data.

17. The cause analyzing apparatus according to claim 14, wherein the generating unit (30) is configured to update the visualized data to a display mode in which an arrangement order of the index is changed.

18. The cause analyzing apparatus according to claim 17, wherein the generating unit (30) is configured to change the arrangement order of the index according to any one of descending order or ascending order of the cause score, descending order or ascending order of the outlier score, descending order or ascending order of the relationship weight, and descending order or ascending order of the property weight.

19. A cause analysis method comprising:

acquiring a reference data group including an objective variable and an explanatory variable, and target data including an objective variable and an explanatory variable;
calculating an outlier score indicating a degree of deviation of the explanatory variable of the target data from a first distribution relating to the explanatory variable of the reference data group;
calculating a relationship weight representing strength of a relationship between the objective variable and the explanatory variable of the reference data group;
calculating a property weight representing a degree of match between values of the objective variable and the explanatory variable of the target data, and a second distribution relating to the objective variable and the explanatory variable of the reference data group; and
calculating a cause score of the explanatory variable for a change in the objective variable of the target data based on the outlier score, the relationship weight, and the property weight.

20. A program including computer executable instructions, wherein the instructions, when executed by a processor, cause the processor to perform a method comprising:

acquiring a reference data group including an objective variable and an explanatory variable, and target data including an objective variable and an explanatory variable;
calculating an outlier score indicating a degree of deviation of the explanatory variable of the target data from a first distribution relating to the explanatory variable of the reference data group;
calculating a relationship weight representing strength of a relationship between the objective variable and the explanatory variable of the reference data group;
calculating a property weight representing a degree of match between values of the objective variable and the explanatory variable of the target data, and a second distribution relating to the objective variable and the explanatory variable of the reference data group; and
calculating a cause score of the explanatory variable for a change in the objective variable of the target data based on the outlier score, the relationship weight, and the property weight.

F I G. 1

```
                    ┌─────────┐
                    │  Start  │
                    └─────────┘
                         │
                         ▼
        ┌────────────────────────────────┐
        │ Acquire reference data group   │──── ST10
        │ (Yi,Xj) and target data (Yi,Xj)│
        └────────────────────────────────┘
                         │                              ──── ST20
                         ▼
        ┌────────────────────────────────┐
        │           i=1, j=1             │──── ST21
        └────────────────────────────────┘
                         │
                         ▼
        ┌────────────────────────────────┐
        │ Calculate outlier score So(Yi,Xj),│
        │  relationship weight Wr(Yi,Xj),   │──── ST22
        │  and property weight Wp(Yi,Xj)    │
        └────────────────────────────────┘
                         │
                         ▼
        ┌────────────────────────────────┐
        │  Calculate cause score S(Yi,Xj) │──── ST23
        └────────────────────────────────┘
                         │
                         ▼
                    ◇ ST24
                  j=M?        ──No──►  ┌──────────────┐
                    │                  │    j=j+1     │──── ST25
                   Yes                 └──────────────┘
                    │
                    ▼
                    ◇ ST26
                  i=N?        ──No──►  ┌──────────────┐
                    │                  │    i=i+1     │──── ST27
                   Yes                 └──────────────┘
                    │                  ┌──────────────┐
                    ▼                  │    j=1       │──── ST28
                ┌─────────┐            └──────────────┘
                │   End   │
                └─────────┘
```

F I G. 2

Cause analyzing apparatus — 1

Calculating unit — 20

Outlier score calculating unit — 21

Relationship weight calculating unit — 22

Property weight calculating unit — 23

Cause score calculating unit — 24

Acquiring unit — 10

Generating unit — 30

Display unit — 40

Reference data group and target data

Cause scores, outlier scores, relationship weights, and property weights

Visualized data

F I G. 3

EP 4 506 769 A1

```
                    ┌──────────┐
                    │  Start   │
                    └────┬─────┘
                         │
                         ▼
        ┌────────────────────────────────────┐
        │  Acquire reference data group       │
        │  (Yᵢ,Xⱼ) and target data (Yᵢ,Xⱼ)    │──ST10
        └────────────────┬───────────────────┘
                         │
                         ▼
        ┌────────────────────────────────────┐
        │  Calculate outlier scores So(Yᵢ,Xⱼ),│
        │  relationship weights Wr(Yᵢ,Xⱼ),    │
        │  property weights Wp(Yᵢ,Xⱼ),        │──ST20
        │  and cause scores S(Yᵢ,Xⱼ)          │
        └────────────────┬───────────────────┘
                         │
                         ▼
        ┌────────────────────────────────────┐
        │     Generate visualized data        │──ST30
        └────────────────┬───────────────────┘
                         │
                         ▼
        ┌────────────────────────────────────┐
        │  Display and control visualized data│──ST40
        └────────────────┬───────────────────┘
                         │
                         ▼
                    ┌──────────┐
                    │   End    │
                    └──────────┘
```

Acquire reference data group $(Y_i, X_j)$ and target data $(Y_i, X_j)$ ──ST10

Calculate outlier scores $So(Y_i, X_j)$, relationship weights $Wr(Y_i, X_j)$, property weights $Wp(Y_i, X_j)$, and cause scores $S(Y_i, X_j)$ ──ST20

Generate visualized data ──ST30

Display and control visualized data ──ST40

# F I G. 4

──d31

| Rank | Explanatory variable $X_j$ | Cause score $S(Y_i, X_j)$ |
|------|------|------|
| 1 | $X_8$ | 0.905 |
| 2 | $X_2$ | 0.744 |
| 3 | $X_1$ | 0.660 |
| 4 | $X_{18}$ | 0.571 |
| 5 | $X_{11}$ | 0.523 |
| ⋮ | ⋮ | ⋮ |

# F I G. 5

FIG. 6

| Rank | Explanatory variable $X_j$ | Cause score $S(Y_i,X_j)$ | Outlier score $S_o(Y_i,X_j)$ | Relationship weight $W_r(Y_i,X_j)$ | Property weight $W_p(Y_i,X_j)$ |
|---|---|---|---|---|---|
| 1 | $X_8$ | 0.905 | 2.660 | 0.474 | 0.717 |
| 2 | $X_2$ | 0.744 | 1.839 | 0.834 | 0.484 |
| 3 | $X_1$ | 0.660 | 2.115 | 0.543 | 0.574 |
| 4 | $X_{18}$ | 0.571 | 1.924 | 0.666 | 0.445 |
| 5 | $X_{11}$ | 0.523 | 3.127 | 0.935 | 0.182 |
| ⋮ | ⋮ | ⋮ | ⋮ | ⋮ | ⋮ |

FIG. 7

EP 4 506 769 A1

d34

2024/04/09

d33

Objective variable $Y_1$

| Rank | Explanatory variable $X_j$ | Cause score $S(Y_i,X_j)$ | Outlier score $S_o(Y_i,X_j)$ | Relationship weight $W_r(Y_i,X_j)$ | Property weight $W_p(Y_i,X_j)$ |
|---|---|---|---|---|---|
| 1 | $X_8$ | 0.905 | 2.660 | 0.474 | 0.717 |
| 2 | uncontrollable $X_2$ | 0.744 | 1.839 | 0.834 | 0.484 |
| 3 | $X_1$ | 0.660 | 2.115 | 0.543 | 0.574 |
| 4 | $X_{18}$ | 0.571 | 1.924 | 0.666 | 0.445 |
| 5 | $X_{11}$ | 0.523 | 3.127 | 0.935 | ! 0.182 |
| 6 | $X_{23}$ | 0.435 | 1.820 | 0.580 | 0.412 |
| ⋮ | ⋮ | ⋮ | ⋮ | ⋮ | ⋮ |

F I G. 8

F I G. 9

EP 4 506 769 A1

F I G. 10

EP 4 506 769 A1

d34

d30

2024/04/09

d33 — Objective variable $Y_1$

Bt — [−]

d32

| Rank | Explanatory variable $X_j$ | Cause score $S(Y_i,X_j)$ | Outlier score $S_o(Y_i,X_j)$ | Relationship weight $W_r(Y_i,X_j)$ | Property weight $W_p(Y_i,X_j)$ |
|---|---|---|---|---|---|
| 1 | $X_8$ | 0.905 | 2.660 | 0.474 | 0.717 |
| 2 | uncontrollable $X_2$ | 0.744 | 1.839 | 0.834 | 0.484 |
| 3 | $X_1$ | 0.660 | 2.115 | 0.543 | 0.574 |
| 4 | $X_{18}$ | 0.571 | 1.924 | 0.666 | 0.445 |
| 5 | $X_{11}$ | 0.523 | 3.127 | 0.935 | ! 0.182 |
| 6 | $X_{23}$ | 0.435 | 1.820 | 0.580 | 0.412 |
| ⋮ | ⋮ | ⋮ | ⋮ | ⋮ | ⋮ |

d31

d33

Objective variable $Y_2$

Bt — [+]

40

F I G. 11

S1 — Display objective variable name, tabular data, and scatter diagram data

~Bt

Decrease in amount of information

Increase in amount of information

~Bt

S2 — Display objective variable name

d30

| | d33 Objective variable name : Y_i | Change button(−) ~Bt | ~40 |
|---|---|---|---|
| | d31 Tabular data | Scatter diagram data ~d32 | |

d30

| d33 Objective variable name : Y_i | Change button(+) ~Bt | ~40 |
|---|---|---|

F I G. 12

d34 — Br — 40 — d30

2024/04/09

Objective variable $Y_1$

● Score order  ○ User-specified order  ● Ascending order  ○ Descending order

Bt

| Rank | Explanatory variable $X_j$ | Cause score $S(Y_i,X_j)$ | Outlier score $S_o(Y_i,X_j)$ | Relationship weight $W_r(Y_i,X_j)$ | Property weight $W_p(Y_i,X_j)$ |
|---|---|---|---|---|---|
| 1 | $X_8$ | 0.905 | 2.660 | 0.474 | 0.717 |
| 2 | uncontrollable $X_2$ | 0.744 | 1.839 | 0.834 | 0.484 |
| 3 | $X_1$ | 0.660 | 2.115 | 0.543 | 0.574 |
| 4 | $X_{18}$ | 0.571 | 1.924 | 0.666 | 0.445 |
| 5 | $X_{11}$ | 0.523 | 3.127 | 0.935 | ! 0.182 |
| 6 | $X_{23}$ | 0.435 | 1.820 | 0.580 | 0.412 |
| ⋮ | ⋮ | ⋮ | ⋮ | ⋮ | ⋮ |

hide ▲

Frequency

$X_1$

Frequency

Objective variable $Y_1$

Dt

Explanatory variable $X_1$

$Y_1$

Objective variable $Y_2$

Bt

Bh

F I G. 13

FIG. 14

EP 4 506 769 A1

FIG. 15

d30

d33 — Objective variable name : $Y_i$ | Change button(−) — Bt
d31 — Tabular data | Scatter diagram data — d32
Bh — ◀ hide

40

d30

Bh — ◀ hide
d33 — Objective variable name : $Y_i$ | Change button(+) — Bt

40

d30

Bs — ▶ show more
Hide

40

S1 — Display objective variable name, tabular data, and scatter diagram data

Decrease in amount of information — Bt →
← Increase in amount of information — Bt

S2 — Display objective variable name

Decrease in amount of information — Bh →
← Increase in amount of information — Bs

S3 — Hide (included in show more)

EP 4 506 769 A1

2024/04/09

Objective variable $Y_1$

●Score order  ○User-specified order  ●Ascending order  ○Descending order

| Rank | Explanatory variable $X_j$ | Cause score $S(Y_i, X_j)$ | Outlier score $S_o(Y_i, X_j)$ | Relationship weight $W_r(Y_i, X_j)$ | Property weight $W_p(Y_i, X_j)$ |
|---|---|---|---|---|---|
| 1 | $X_8$ | 0.905 | 2.660 | 0.474 | 0.717 |
| 2 | uncontrollable $X_2$ | 0.744 | 1.839 | 0.834 | 0.484 |
| 3 | $X_1$ | 0.660 | 2.115 | 0.543 | 0.574 |
| 4 | $X_{18}$ | 0.571 | 1.924 | 0.666 | 0.445 |
| 5 | $X_{11}$ | 0.523 | 3.127 | 0.935 | ! 0.182 |

show more ▼

Objective variable $Y_2$

F I G. 16

1

201                              202                              203

| CPU | RAM | Program memory |

204                              205

| Auxiliary storage device | Input/output interface |

F I G. 17

Europäisches
Patentamt

European
Patent Office

Office européen
des brevets

# EUROPEAN SEARCH REPORT

**Application Number**

EP 24 15 9046

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/236725 A1 (IMANARI HIROYUKI [JP]) 28 July 2022 (2022-07-28) * the whole document * | 1-20 | INV. G05B23/02 G06N7/01 G06Q10/063 G06Q10/0639 G06Q10/10 G06Q50/04 |

**TECHNICAL FIELDS SEARCHED (IPC)**

G05B
G06Q
G06N

The present search report has been drawn up for all claims

| Place of search | Date of completion of the search | Examiner |
|---|---|---|
| Munich | 5 September 2024 | Melis, Caterina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 9046

This annex lists the patent family members relating to the patent documents cited in the above-mentioned European search report.
The members are as contained in the European Patent Office EDP file on
The European Patent Office is in no way liable for these particulars which are merely given for the purpose of information.

05-09-2024

| Patent document cited in search report | Publication date | Patent family member(s) | | Publication date |
|---|---|---|---|---|
| US 2022236725 A1 | 28-07-2022 | CN | 113939777 A | 14-01-2022 |
| | | JP | 7180796 B2 | 30-11-2022 |
| | | JP | WO2021229727 A1 | 18-11-2021 |
| | | KR | 20210154832 A | 21-12-2021 |
| | | TW | 202143081 A | 16-11-2021 |
| | | US | 2022236725 A1 | 28-07-2022 |
| | | WO | 2021229727 A1 | 18-11-2021 |

EPO FORM P0459

For more details about this annex : see Official Journal of the European Patent Office, No. 12/82